(19) Europäisches Patentamt

European Patent Office

Office européen des brevets

(11) **EP 4 567 544 A1**

(12) **EUROPEAN PATENT APPLICATION**

(43) Date of publication:
**11.06.2025 Bulletin 2025/24**

(21) Application number: **24218146.9**

(22) Date of filing: **06.12.2024**

(51) International Patent Classification (IPC):
***G05F 1/67*** (2006.01)

(52) Cooperative Patent Classification (CPC):
**G05F 1/67; H02J 2300/26**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.12.2023 US 202363607797 P**

(71) Applicant: **Solaredge Technologies Ltd.
Herzeliya 4673335 (IL)**

(72) Inventor: **ZALTZHENDLER, Oren
4673335 Herzeliya (IL)**

(74) Representative: **V.O.
P.O. Box 87930
2508 DH Den Haag (NL)**

(54) **SYSTEM AND METHODS FOR MPPT OF A POWER SOURCE**

(57) The MPPT methods described herein use different MPPT timesteps with corresponding voltage steps. The voltage step may applied based on the MPPT timestep or vice versa. According to one example, a power difference between the output power level of the photovoltaic panel is determined and a previous output power level. For each MPPT frequency, the voltage of the photovoltaic panel by a voltage step corresponding to the MPPT frequency is modified based on the power difference. According to another example, a voltage step which corresponds to the power difference is determined. A timestep corresponding to the voltage step is determined and the voltage of the photovoltaic panel is modified by the voltage step for the duration of the timestep.

Fig. 2C

EP 4 567 544 A1

**Description**

CROSS-REFERENCE TO RELATED APPLICATIONS

This application claims the benefit of U.S. Provisional Application No. 63/611,297, filed on December 18, 2023. The above referenced application is hereby incorporated by reference in its entirety.

FIELD OF THE DISCLOSURE

The description herein relates to systems and methods for Maximum Power Point Tracking (MPPT) of power sources.

BACKGROUND OF THE DISCLOSURE

It can be useful to harvest power from a power source at the Maximum Power Point (MPP). For instance, harvesting power from a photovoltaic panel at the MPP of the photovoltaic panel may ensure that the photovoltaic panel produces maximum power at all operating times. One way of harvesting power from a photovoltaic panel at the MPP may be MPP Tracking (MPPT). One example of MPPT is Perturb and Observe (P&O). The time-period corresponding to the MPPT frequency may be referred to as "dwell time" or as "MPPT timestep". The level by which the voltage across the terminals of the photovoltaic panel is modified may be referred to herein as a "voltage step".

BRIEF SUMMARY OF THE DISCLOSURE

The following presents a simplified summary of the disclosure in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.
When using P&O, every time-period corresponding to an MPPT frequency (i.e., the frequency at which the MPP is tracked), the voltage level across the terminals of the photovoltaic panel may be modified (e.g., increased or decreased), and the level of the current flowing from the photovoltaic panel may be measured. A determination may be made if the power from the photovoltaic panel is increased or decreased, relative to a previous time-period. Based on this determination, the voltage level across terminals may be modified (e.g., increased or decreased) by a voltage step. The modification of the voltage level may depend on the difference between the power at two consecutive time-periods. If the power from the photovoltaic panel increases, the method may continue and modify the voltage level across the terminals of the photovoltaic panel in the same direction (e.g., continue to increase or continue to decrease). If the power from the photovoltaic panel decreases, the method may alter the direction of modification of the voltage level (e.g., increase the voltage if the voltage was previously decreased, or decrease the voltage if the voltage was previously increased). A similar method may be used by changing the current level and measuring the voltage level change. For ease of the explanation, the description herein may relate to a P&O method in which the voltage of the photovoltaic panel is modified.
A similar method to the P&O method may be used for I-V curve scanning. Every time-period corresponding to a scan frequency (i.e., the frequency at which the I-V curve is scanned), the voltage level across the terminals of the photovoltaic panel may be modified (e.g., increased or decreased), and the level of the current flowing from the photovoltaic panel may be measured. A record may be made of the voltage level applied across the terminals of the photovoltaic panel and the corresponding measured current. In some cases, a photovoltaic panel may be scanned by increasing the voltage across the terminals (e.g., forward scan), decreasing the voltage across the terminals (e.g., backward scan), or by performing both forward and backward scans.
In an example of an MPPT P&O method, the size of the voltage step may vary based on the difference between the determined power from the photovoltaic panel at two consecutive timesteps. For example, the size of the voltage step may be proportional to the determined power difference. A varying voltage step may be referred to herein as "dynamic step" or "dynamic voltage steps."
The disclosure herein may relate to any number of different power sources. For example, in some embodiments, the systems and methods described herein may be applied to photovoltaic panels having high output capacitance (e.g., relative to silicon type panels). The disclosure may relate to any photovoltaic panel where the output capacitance may change with the MPPT frequency. Additionally, the disclosure may relate to any photovoltaic panel where the output capacitance may change with the voltage steps or current steps applied to the terminals of the photovoltaic panel. According to the MPPT methods described herein, different MPPT timesteps are used with corresponding voltage steps used. Thus, each voltage step may have a different corresponding dwell time. The disclosure herein may describe methods performing MPPT with different voltage steps and corresponding MPPT timesteps, and methods for associating between different voltage step sizes and corresponding MPPT timesteps.

A first aspect of the disclosure provides that the MPPT timesteps may be determined based on different MPPT frequencies, where each frequency may be associated with a corresponding voltage step. Thus, for example, short MPPT timesteps may be associated with lower voltage steps and long MPPT timesteps may be associated with higher voltage steps. The short MPPT timesteps and small voltage steps allow for a fast response to changes in the MPP, though the error between actual and measured power produced by the photovoltaic panel may be large. Long MPPT timesteps and large voltage steps allow for a slower response though the error between actual and measured power produced by the photovoltaic panel may be smaller. The different MPPT frequencies may be regarded as independent MPPT processes.

A second aspect of the disclosure provides for a MPPT method which may be performed using dynamic voltage steps, where each voltage step may be associated with a corresponding MPPT timestep. In cases where dynamic steps are used, the error current may be equal for all the voltage steps and corresponding MPPT timesteps. As mentioned above, when using dynamic step the voltage step is determined based on a corresponding power difference. The MPPT timestep may be determined based on a voltage step to MPPT timesteps correspondence.

BRIEF DESCRIPTION OF THE DRAWINGS

A more complete understanding of the present disclosure and the advantages thereof may be acquired by referring to the following description in consideration of the accompanying drawings, in which like reference numbers indicate like features, and wherein:

Figure 1A shows two graphs representing examples of a step response of current flowing from a photovoltaic panel to two corresponding different voltage steps increase applied to the photovoltaic panel;

Figure 1B shows two graphs representing example I-V curves of the photovoltaic panel.

Figure 2A shows an example system according to the disclosure herein;

Figure 2B shows an example system according to the disclosure herein;

Figure 2C shows an example MPPT method according to the disclosure herein;

Figure 2D shows an example timing diagram of a voltage change across the photovoltaic panel;

Figures 3A-3C show example MPPT control signals and an example corresponding resulting timing diagrams of the voltage across the photovoltaic panel;

Figure 3D shows an example MPPT method using voltage steps associated with different MPPT frequencies;

Figures 3E and 3F show example methods that may be used for determining the correspondence of MPPT frequencies to voltage steps based on error current thresholds associated with the MPPT timesteps;

Figures 4A-4C show example diagrams depicting MPPT using dynamic voltage steps where the voltage steps associated with different MPPT timesteps;

Figure 4D shows an example method that may be used for determining various operating characteristics of MPPT using a dynamic step according to the disclosure herein;

Figure 4E shows an example method that may be used for MPP tracking using a dynamic step and the determined voltage steps to MPPT timesteps correspondence and the determined power differences to voltage steps correspondence;

Figure 4F shows an example of power differences vs voltage steps where the correspondence may be a power difference to voltage step correspondence;

Figure 4G shows an example of a current step response over an initial time-period;

Figure 4H shows an example of a frequency sweep;

Figure 4I shows an example of a current frequency response based on the frequency sweep;

Figure 4J shows an example method that may be used for determining a correspondence between voltage steps and MPPT timesteps based on an error current that may be used in MPPT employing a dynamic step;

Figures 4K-4M show example graphs that may be used for determining voltage steps to MPPT timesteps correspondence with reduced computational complexity;

Figure 4N shows an example method, having reduced computational complexity, for determining a correspondence between voltage steps and MPPT timesteps;

Figure 4O shows an example method for reducing the computational complexity of determining a correspondence between a voltage step and a MPPT timestep; and

Figure 5 shows a method for an MPPT tracking iteration.

DETAILED DESCRIPTION OF THE DISCLOSURE

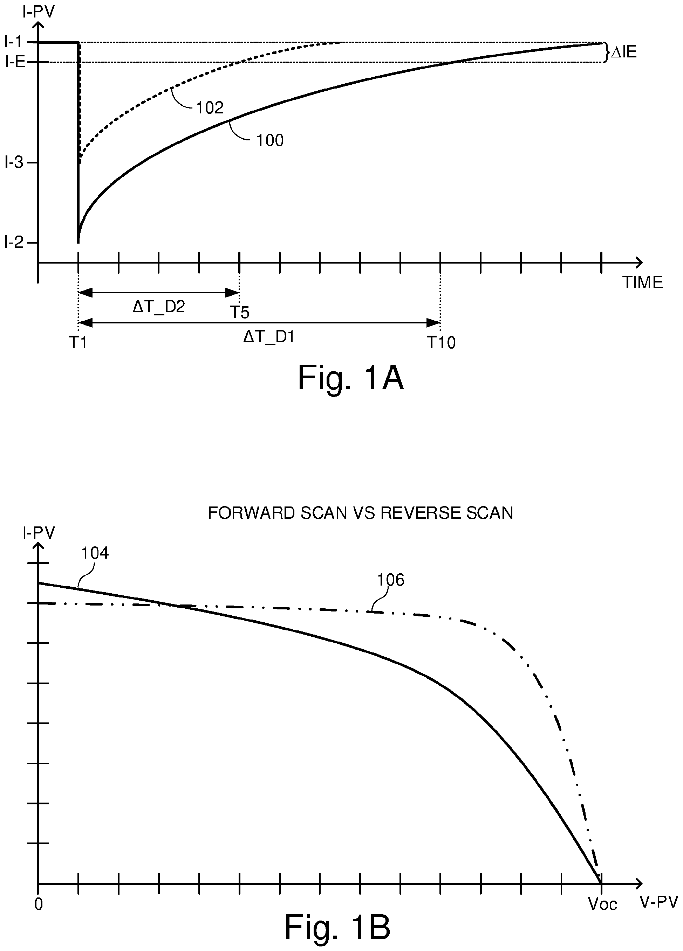

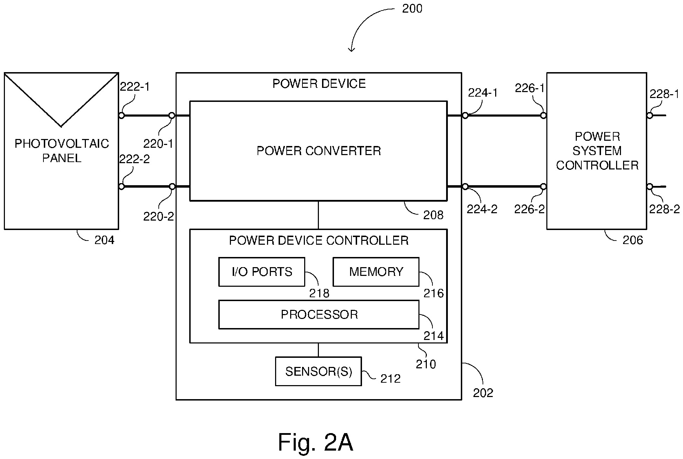

In the following description of the various embodiments, reference is made to the accompanying drawings, which form a part hereof, and in which is shown by way of illustration various embodiments in which the disclosure may be practiced. It is to be understood that other embodiments may be utilized and structural and functional modifications may be made without departing from the scope of the present disclosure. Figures 1A and 1B show example graphs for explaining terminology which may be used in the disclosure herein. As shown in figure 1A, graphs 100 and 102 represent a step response over time of the current, I-PV, flowing from a photovoltaic panel (e.g., photovoltaic panel 204 - Figure 2A), corresponding to two different voltage step increases applied between the terminals (e.g., terminals 222-1 and 222-2 Figure 2A) of the photovoltaic panel. A voltage step increase may relate to increasing the voltage between terminals of the photovoltaic panel by a voltage step, and a voltage step decrease may relate to decreasing the voltage between the terminals of the photovoltaic panel by the voltage step. As seen in Figure 1A, two voltage step increases, VS1 and VS2 (not shown in Figure 1A), are applied at time T 1, with VS1 being a larger voltage step than VS2. Graph 100 may represent the current step response corresponding to VS1 and graph 102 may represent the current step response corresponding to VS2.

In Figure 1A, for the case where VS1 is applied to the terminals of a photovoltaic panel, the current flowing from the photovoltaic panel, I-PV, may decrease from a level of I1 to a level of I2. Thereafter, I-PV may start to increase back toward I1. In Figure 1A, after VS1 is applied and I-PV reduced to a level of I2, the current flowing from the photovoltaic panel increases and reaches an "error current", I-E, at time T10, after a time-period $\Delta T\_D1$ (e.g., 9 time units in Figure 1A). The error current may be defined by a "current error difference" (e.g., $\Delta IE$). $\Delta IE$ may be a parameter which may depend on a determined acceptable error of the MPP during the MPPT process.

In Figure 1A, for the case where VS2 is applied to the terminals of photovoltaic panel, the current flowing from photovoltaic panel decreases from a level of I1 to a level of I3. Thereafter, I-PV starts to increase back toward I1. The current flowing from photovoltaic panel 204 reaches I-E at time T5, after a time-period, $\Delta T\_D2$ (e.g., 4 time units in Figure 1A). The time-period for the current flowing from the photovoltaic panel to reach I-E, after applying a voltage step, may be referred to herein as "current response time". The current response time may affect the dwell time of the MPPT method. In the example shown in Figure 1A, the current response time corresponding to VS 1 is 9 time units and the current response time corresponding to VS2 is 4 time units.

In Figure 1B, which depicts two example graphs 103 ad 106 according to embodiments of the disclosure. As shown in FIG. 1B, graphs 104 and 106 represent I-V curves of the photovoltaic panel (e.g., photovoltaic panel 204 - Figure 2A below). Graph 104 may represent the IV curve of the photovoltaic panel in case of a voltage increase across the terminals of the photovoltaic panel. Graph 104 may also be referred to as a "forward scan" from zero volts to the open circuit voltage, Voc, of the photovoltaic panel. Graph 106 may represent the IV curve of the photovoltaic panel in case of a voltage decrease across the terminals of the photovoltaic panel. Graph 106 may also be referred to as a "reverse scan" from VocV to zero volts. As can be seen in Figure 1B, the photovoltaic panel may respond differently in a case of a forward scan relative to a reverse scan. For example, in perovskite type cells, the difference between the forward and reverse scans may be due to the different settling time of the current in case the voltage is increased or decreased. Therefore, for the same sampling frequency, the current may be measured at different stages of the response to the change in voltage.

According to some embodiments of the disclosure, the described MPPT systems and methods may be applied to photovoltaic panels comprising of various materials/chemistry or to tandem photovoltaic panels. For example, the described MPPT systems and methods may be applied to perovskite type photovoltaic panels. Perovskite type photovoltaic panels are drawing increased interest in the industry due to the ability to control the energy bandgap of the material, their light weight, mechanical flexibility, low manufacturing costs, and the return on fabrication energy. MPPT in perovskites type photovoltaic panels may present challenges since the capacitance across the terminals of the photovoltaic panel may be larger relative to other types of photovoltaic panels (e.g., silicon based photovoltaic panels). Therefore, the current response time of a perovskite type panel may be larger than for other types of photovoltaic panels. Another challenge may be that the capacitance across the terminals of the photovoltaic panel may be affected by the MPPT frequency and/or the voltage step size used. Therefore, the current response time may also depend on the MPPT frequency used and/or the voltage step size. Furthermore, as further described in Figure 1B, perovskite type cells may have characteristics (e.g., I-V curve) which may vary, depending if the voltage across the terminals of the perovskite type panel is increased or decreased.

When used in embodiments comprising perovskite type photovoltaic panels, the MPPT methods described herein may account for different current response times corresponding to different voltage steps applied to a perovskite type photovoltaic panel, by using different MPPT timesteps corresponding to the voltage steps used. Thus, each voltage step may have a different corresponding dwell time. The disclosure herein also describes methods for performing MPPT with different voltage steps and corresponding MPPT timesteps, and methods for associating between different voltage step sizes and corresponding MPPT timesteps. The description herein may refer to perovskite type photovoltaic panels as an example. The disclosure herein may relate to any photovoltaic panel which has a high output capacitance (e.g., relative to silicon type panels), which may change with the MPPT frequency, and/or the size of the voltage steps or current steps applied to the terminals of the photovoltaic panel (e.g., CIGS, CdTe, or amorphous silicon). The disclosure herein may relate to photovoltaic panels including combinations of materials. One example of a photovoltaic panels including combinations of materials may be a tandem photovoltaic panels, where the cells in the tandem panel include a combination of silicon type cell and perovskite type cell "stacked" one on top of the other with a tunnel junction connecting the two cells.

Figures 2A-2D show examples of an apparatus, a system, a graph, and a method according to various embodiments of the disclosure. As shown in Figure 2A, example power system 200 may include, a power device 202, a photovoltaic panel 204 and a power system controller 206. Source side terminals $220_1$ and $220_2$ of power device 202 may be coupled to terminal 222-1 and 222-2 of photovoltaic panel 204. Load side terminals 224-1 and 224-2 of power device 202 may be coupled to terminals 226-1 and 226-2 of power system controller 206. Power device controller 210 may be coupled to power converter 208 and to sensor(s) 212.

Power device 202 may comprise a power converter 208, a power device controller 210, and sensor(s) 212. Power device controller 210 may comprise one or more processors 214, connected to a memory 216 and to Input/Output (I/O) ports 218. Memory 216 may store computer readable instructions as well as data (e.g., measurements from sensor(s) 216 or parameters). I/O ports 218 may be configured to connect modules (e.g., sensor(s) 216, or other modules of power system 200) to power device controller 210. The one or more processor 214 may execute instructions, which may result in power device controller 210 performing one or more steps or functions as described herein that are attributed to any one of power device 202, power device controller 210 or processor 214.

Power converter 208 may be configured to convert power from source side terminals 220-1 and 220-2 (e.g., received from photovoltaic panel 204) to power at load side terminals 224-1 and 224-2, or vice versa. Power converter 208 may comprise switches (e.g., transistors, diodes and the like), which may be configured as a DC-to-DC power converter such as a buck converter, a boost converter, a buck-boost converter, a buck-and-boost converter Cuk, Flyback, single-ended primary-inductor converter (SEPIC), switched auto-transformer, or a charge pump. Power converter 208 may be configured as a DC-to-AC power converter such as half-bridge, full-bridge (H-Bridge), flying capacitor circuit, cascaded-H-bridge, Neutral Point Clamped (NPC), A-NPC, or a T-type NPC inverting circuit employing two or more conversion levels. Power device controller 210 may control and monitor power converter 208 by employing a pulse width modulation (PWM) signal. Power converter 208 may operate at a switching frequency between 1KHz - 10MHz. For example, power converter 208 may operate at a switching frequency between 16 KHz - 1 MHz, (e.g., at frequencies which losses may be reduced). Power device 202, using power converter 208, sensor(s) 212, and power device controller 210, where power device controller 210 may use measurements from sensor(s) 212 and control power converter 208 based on an MPPT algorithm, may be configured to harvest power from the photovoltaic panel 204 at an MPP of photovoltaic panel 204.

Power device controller 210 may be partially or fully implemented as one or more computing devices or may comprise one or more processors, such as an Application Specific Integrated Circuit (ASIC) controller, Field Programmable Gate Array (FPGA) controller, a microcontroller, a digital signal processor (DSP), or a multipurpose computer. Power device controller 210 may be a distributed controller, comprising multiple microcontrollers, microcomputers, or cloud servers. The multiple microcontrollers, microcomputers, or cloud servers may be located at the same location (e.g., at the user premises). The multiple microcontrollers, microcomputers, or cloud servers may be located at different locations. For example, some microcontrollers or microcomputers may be located at the user premises while other microcontrollers or microcomputers, and the cloud servers may be located at another location or locations. Methods or steps described herein may be carried out by different ones of the multiple microcontrollers, microcomputers, or cloud servers, and/or at different times. The multiple microcontrollers, microcomputers, or cloud servers may communicate using one or more communication protocols. The multiple microcontrollers, microcomputers, or cloud servers may communicate using, for example, Ethernet, RS-485, Wi-Fi, DSL, various cellular protocols, and/or data transfer protocols (e.g., TCP-IP, IPX/SPX, DECnet, Ipsec/IP, or UDP/IP).

Sensor(s) 212 may comprise one or more voltage sensors, one or more current sensors, one or more temperature sensors, one or more humidity sensors, and/or one or more specific gravity sensors. The one or more voltage sensor may be configured to measure a voltage at corresponding one or more terminals 220-1, 220-2, 224-1 or 224-2 of power device 202. For example, the one or more voltage sensors may measure a corresponding voltage of photovoltaic panel 204. The one or more voltage sensors may comprise a resistive or capacitive divider, a resistive or capacitive bridge, comparators (e.g., employing operational amplifiers), or the like. The one or more current sensors may be configured to measure a current through corresponding one or more terminals 220-1, 220-2, 224-1 or 224-2 of power device 202. For example, the one or more current sensors may measure a corresponding current flowing from photovoltaic panel 204. The one or more current sensors may comprise a Current Transformer (CT) sensor, Hall effect sensor, zero flux sensor, current sense resistors or the like. The one or more temperature sensors may be configured to measure the temperature of power device 202.

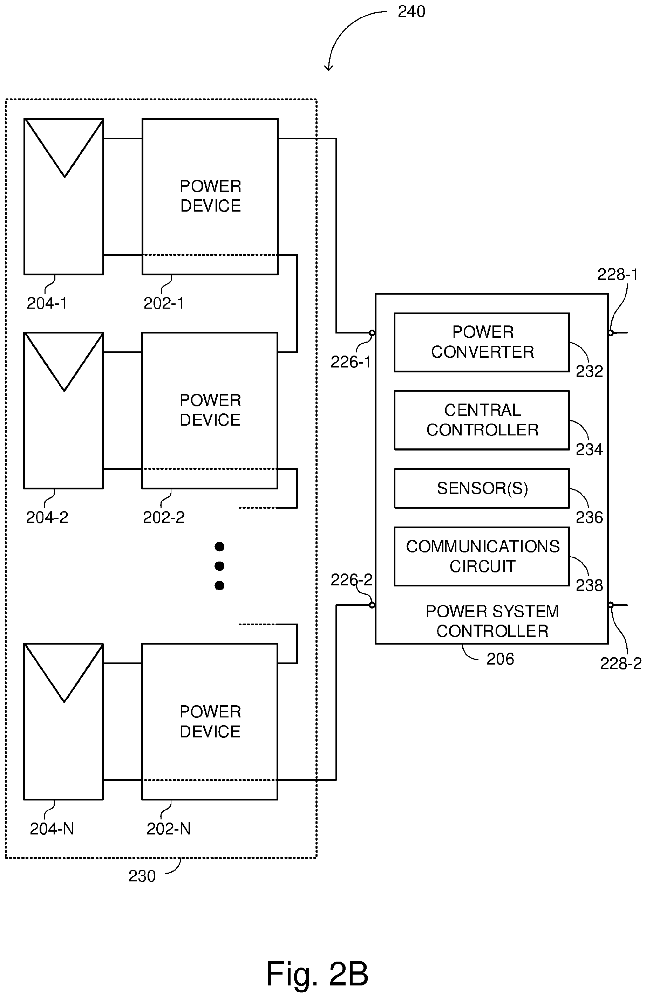

According to various embodiments, methods described herein may apply to a system comprising a plurality of power devices (e.g., power device 202) and corresponding photovoltaic panel (e.g., photovoltaic panel 204). Figure 2B shows an example power system 240, which may comprise power system controller 206 and a string 230 of power devices 202-1, 202-2, ..., 202-N and corresponding photovoltaic panels 204-1, 204-2, ..., 204-N. In Figure 1B, string 230 may be coupled to power system controller 206 (e.g., at terminals 226-1 and 226-2). In Figure 2B, power devices 202-1, 202-2, ..., 202-N are shown as being connected in series. Power system controller 206 may comprise a power converter 232, a central controller 234, sensor(s) 236, and a communications circuit 237. Power converter 232 may be connected power device 202 or to string 230. Where the one or more power devices 202-1, 202-2, ..., 202-N produce AC power (e.g., in the instance of microinverters), power converter 232 may be replaced with a power combiner. Power devices 202-1, 202-2, ..., 202-N may also be connected in parallel. Power system controller 206 may be connected to a grid via terminals 228-1- and 228-2.

Power converter 232 may be configured as a DC-AC converter (e.g., inverter) such as half-bridge, full-bridge (H-Bridge), flying capacitor circuit, cascaded-H-bridge, Neutral Point Clamped (NPC), A-NPC, or a T-type NPC inverting circuit employing two or more conversion levels, and producing AC power at terminals 228-1 and 228-2. Central controller 234 may control and monitor power converter 232 by employing a pulse width modulation (PWM) signal or signals. Power converter 208 may operate at a switching frequency between 1KHz - 10MHz.

Central controller 234 may be partially or fully implemented as one or more computing devices or may include one or more processors, such as an Application Specific Integrated Circuit (ASIC) controller, Field Programmable Gate Array (FPGA) controller, a digital signal processor (DSP), a microcontroller, or a multipurpose computer. Central controller 234 may comprise one or more processors, connected to memory, and to Input/Output (I/O) ports. Central controller 202 may comprise a user interface (e.g., a keyboard, a mouse, a display, a microphone, a speaker, a touch screen, or a touchpad). The memory may store computer readable instructions as well as data (e.g., measurements from sensor(s) 236 or parameters).

Communications interface 206 may be a receiver, a transmitter, or a transceiver, and may be configured to communicate, based on a communications protocol, signals with one or more other transmitters, receivers, or transceivers, over a medium. The communication protocol may define one or more characteristics of the signals and/or of communications using signals, such as a transmission frequency or frequencies, a modulation scheme (e.g., Amplitude shift keying - ASK, Frequency shift keying - FSK, Quadrature Phase Shift Keying - QPSK, Quadrature Amplitude Modulation - QAM, ON OFF keying - OOK), multiple access scheme (e.g., Time Division Multiple Access - TDMA, Frequency Division Multiple Access - FDMA, Code Division Multiple Access - CDMA, Carrier Sense Multiple Access - CSMA, Aloha), encoding/decoding schemes (e.g., Non Return to Zero - NRZ, Manchester coding, Block coding), or any other characteristic. The medium may be a wired or a wireless medium. For example, a wired medium may be a dedicated communications cable (e.g., twisted pair, coaxial cable). A wired medium may include power lines connecting the power devices 116-1, 116-2, ..., 116-N to the power converter 204.

Sensor(s) 208 may comprise one or more voltage sensors (e.g., implemented by employing a resistive or capacitive divider, a resistive or capacitive bridge, or comparators), one or more current sensors (e.g., implemented by employing a Current Transformer (CT) sensor, a Hall Effect sensor, or a zero flux sensor), or one or more frequency sensors.

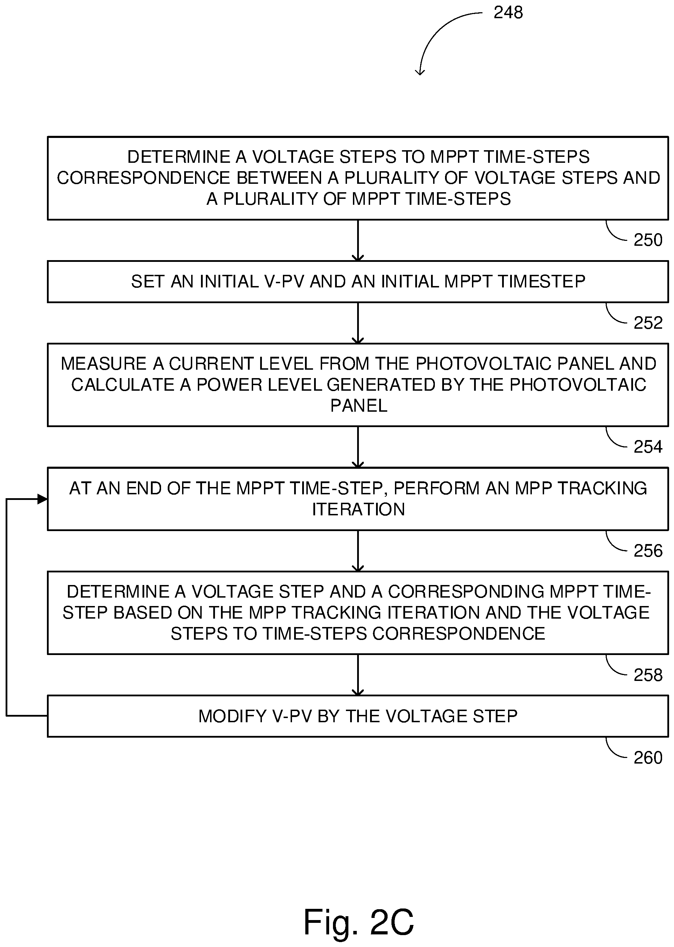

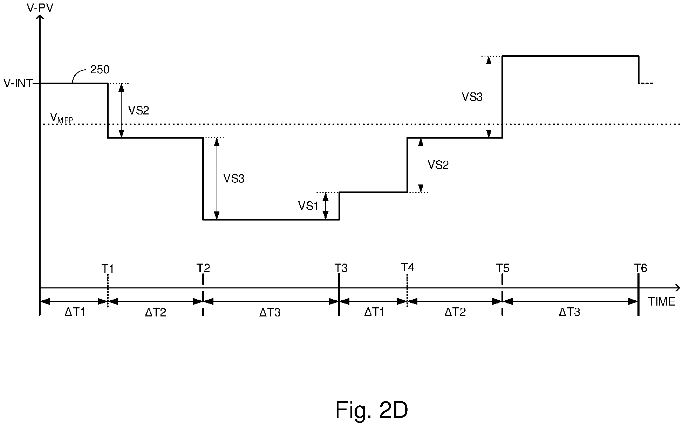

As described herein, methods for conducting MPPT using the different voltage steps and corresponding MPPT timesteps may be used, for example, to alleviate the effect of the different current response times corresponding to different voltage steps and the effects of the MPPT frequency on the capacitance of photovoltaic panel. Figures 2C and 2D show an example method and timing diagram showing MPPT using different voltage step sizes and corresponding timesteps.

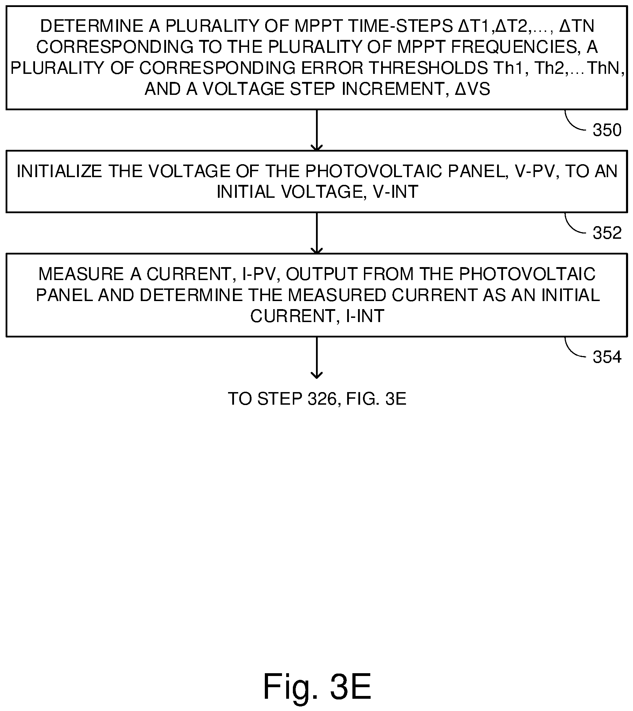

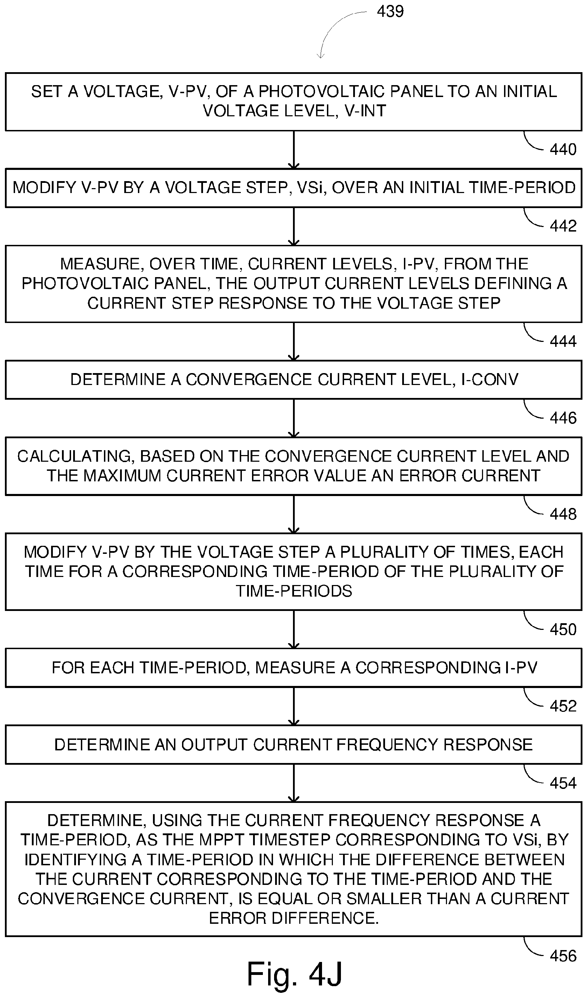

FIG. 2C, shows an example method 248 of MPPT using different voltage step sizes and corresponding timestamps. While the method in FIG. 2C is discussed with reference to the previous figures, it should be noted that the method 248 is not so limited to those particular examples. As shown, at step 250, controller 210 may determine a voltage steps to MPPT timesteps correspondence between a plurality of MPPT timesteps and a plurality of voltage steps. Thus, each voltage step may be associated with a corresponding MPPT timestep. Examples of determining voltage steps to MPPT timesteps correspondence may be described in conjunction with Figures 3E-3F or 4J as described herein. Figure 2D shows an example voltage step VS1 that may be associated with timestep $\Delta$T1, voltage step VS2 that may be associated with timestep $\Delta$T2, and voltage step VS3 that may be associated with timestep $\Delta$T3.

At step 252, controller 210 may control power converter 208 to set an initial voltage level, V-INT, across terminals 222-1 and 222-2 of photovoltaic panel 204. Controller 210 may set an initial MPPT timestep. For example, in Figure 2D, controller 210 sets $\Delta$T1 as the initial MPPT timestep and V-INT as the initial voltage level across terminals 222-1 and 222-2 of photovoltaic panel 204. V-INT may be determined arbitrarily or, in some embodiments, V-INT may be a previously determined MPP voltage of photovoltaic panel 204. According to various embodiments, V-INT may also approximate the MPP voltage of photovoltaic panel 204 (e.g., when the open circuit voltage of the photovoltaic panel, Voc, is known, V-INT may be set to 76% of Voc).

At step 254, sensor(s) 212 may measure a current level from photovoltaic panel 204 and controller 210 may calculate a power level generated by photovoltaic panel 204. Thus controller 210 determines an output power level from a photovoltaic panel 204.

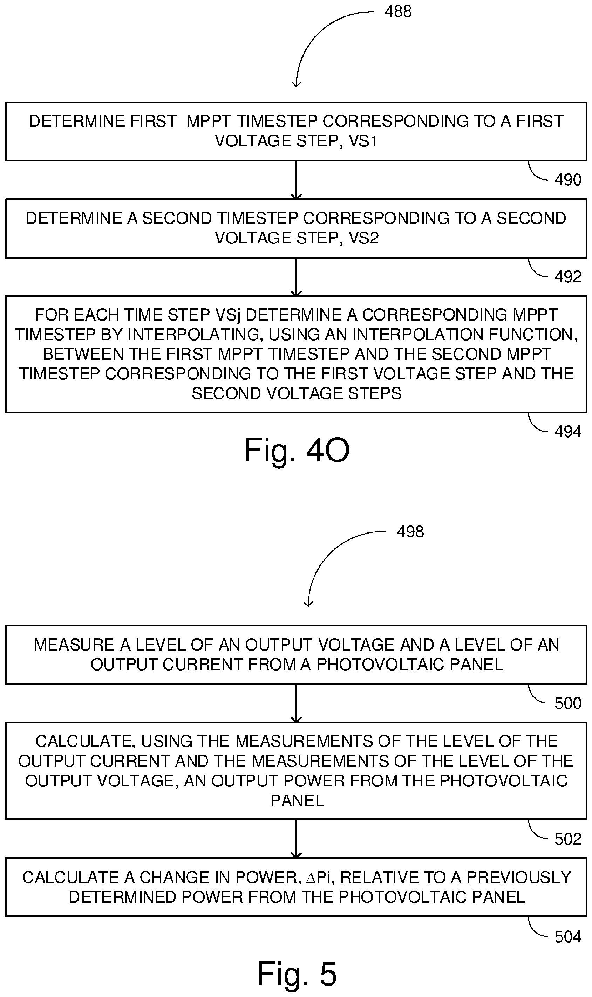

At step 256, at an end of the timestep, controller 210 may perform an MPP tracking iteration to determine a change in power, $\Delta$Pi, relative to a previously determined power from photovoltaic panel 204 (e.g., determined in previous MPPT timestep). Performing an MPP tracking iteration may be described herein in conjunction with Figure 5.

At step 258, based on the change in power, $\Delta$Pi, controller 210 may determine a voltage step and a corresponding MPPT timestep. For example, in Figure 2D, at time T1, at the end of MPPT timestep $\Delta$T1, controller 210 may determine that the power from photovoltaic panel 204 decreased. Controller 210 may determine to reduce the voltage across the terminals 222-1 and 222-2 of photovoltaic panel 204 by a voltage step VS2, and determines the next MPPT timestep to be $\Delta$T2 (e.g., $\Delta$T2 is the timestep corresponding to voltage step VS2). For example, at time T2, the end of MPPT timestep $\Delta$T2, controller 210 may determine that the power from photovoltaic panel 204 increased. Since at time T1 controller 210 reduced the voltage level across the terminals 222-1 and 222-2 of photovoltaic panel 204, and the power from photovoltaic panel 204 increased, controller 210 may determine to decrease the voltage level across terminals 222-1 and 222-2 again by a voltage step VS3, and determines the next MPPT timestep to be $\Delta$T3 (e.g., $\Delta$T3 is the timestep corresponding to voltage step VS3). For example, at time T3, the end of timestep $\Delta$T3, controller 210 may determine that the power from photovoltaic panel 204 decreased. Since at time T2 controller 210 reduced the voltage level across the terminals 222-1 and 222-2 of photovoltaic panel 204, and the power from photovoltaic panel 204 decreased, controller 210 may determine to increase the voltage level across terminals 222-1 and 222-2 by a voltage step VS1, and determines the next MPPT timestep to be $\Delta$T1 (e.g., $\Delta$T1 is the timestep corresponding to voltage step VS1).

At step 260, controller 210 controls power converter 208 to modify the voltage, V-PV, across terminals 222-1 and 222-2 of photovoltaic panel 204, by the determined voltage step, VS. For example, at time T1, controller 210 controls converter 208 to apply the voltage step VS2. For example, at time T2, controller 210 controls converter 208 to apply the voltage step VS3. For example, at time T3, controller 210 controls converter 208 to apply the voltage step VS1.

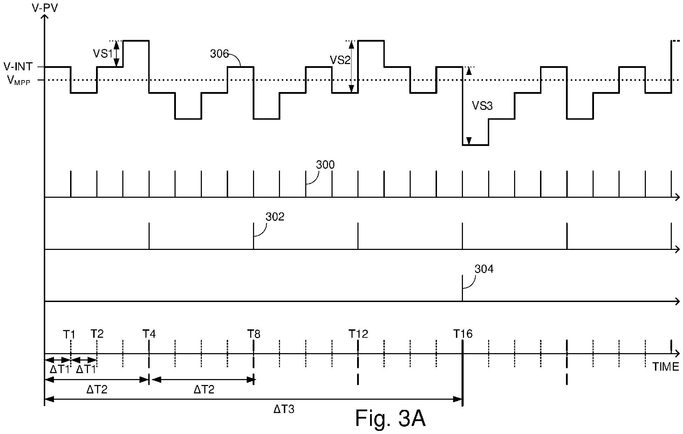

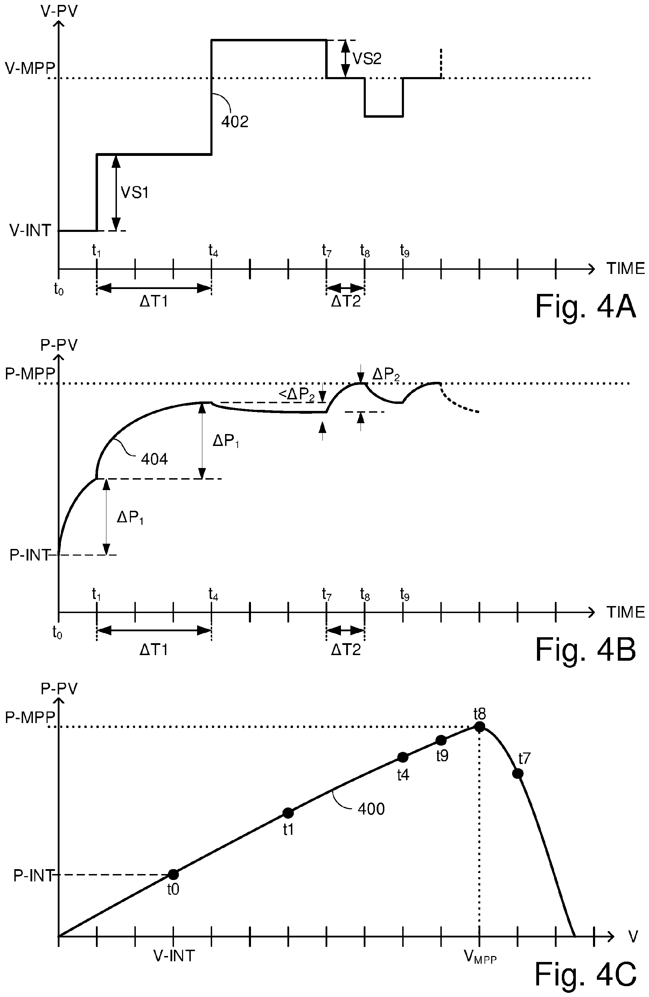

The example of Figure 2D shows three consecutively increasing timesteps with corresponding increasing voltage steps. It is noted that the example shown in Figure 2D should not be considered limiting. Additional examples are described herein in Figures 3A-3F and 4A-4O. Although it may be shown that the timestep is proportional to the voltage step, this may not always be the case. As described herein, the timestep is related to the change in capacitance caused by the voltage step.

As described herein, some types of photovoltaic panels (e.g. perovskite type panels, CIGS, CdTe, or amorphous silicon, to name a few non-limiting examples) may have a large output capacitance. This larger output capacitance may require longer dwell times (e.g., relative to other types of photovoltaic panels) due to the longer current response time. However, longer dwell times relate to lower MPPT frequencies, and thus a slower response to changes in the MPP. Also, some panels may include photovoltaic cells made of a combination of materials (e.g., 3-port tandem cells), where each pair of ports may have a corresponding output capacitance. Therefore, to account for the longer current response time, and to be able to respond to changes in the MPP, according to the disclosure herein, and as may further be elaborated below in conjunction with Figures 3A-3F, a plurality of different MPPT timesteps corresponding to different MPPT frequencies may be used. Each MPPT frequency may be associated with a corresponding voltage step. Thus, for example, short MPPT timesteps may be associated with lower voltage steps and long MPPT timesteps may be associated with higher voltage steps. The short MPPT timesteps and small voltage steps allow for a fast response to changes in the MPP, though the error between actual and measured power produced by photovoltaic panel 204 may be large. The long MPPT timesteps and large voltage steps allow for a slower response though the error between actual and measured power produced by photovoltaic panel 204 may be lower. The different MPPT frequencies may be regarded as independent MPPT processes.

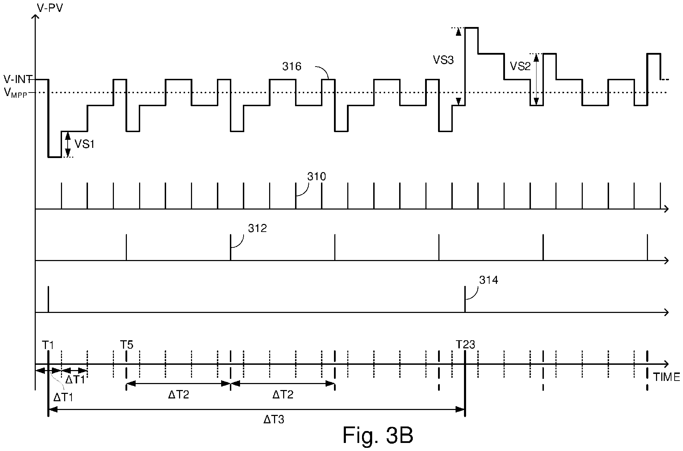

Figures 3A-3F show example methods for MPPT using a plurality of MPPT frequencies where each MPPT frequency may be associated with a corresponding voltage step, related graphs, as well as a method for determining a correspondence between the voltage steps and the MPPT frequencies. Figures 3A and 3B show example timing diagrams relating to an example of MPPT, where the three MPPT timesteps ΔT1-ΔT3 are defined by three MPPT frequencies. Figure 3A shows three example MPPT control signals, 300, 302 and 304, each of a different frequency. MPPT control signal 300 defines an MPPT timestep ΔT1 (which may be the inverse of the first frequency of MPPT control signal 300). MPPT control signal 302 defines an MPPT timestep ΔT2 (which may be the inverse of the second frequency of MPPT control signal 302). MPPT control signal 304 defines an MPPT timestep ΔT3 (which may be the inverse of the first frequency of MPPT control signal 304). Figure 3A shows an example of a timing diagram 306 of the voltage across terminals 222-1 and 222-2 of photovoltaic panel 204 which may result from MPPT using MPPT control signals 310, 312, and 314.

Controller 210 may use a plurality of MPPT control signal to perform MPPT of the power from photovoltaic panel 204. Each MPPT control signal may define an independent MPPT process. Controller 210 may generate the plurality of MPPT control signal using, for example, corresponding clocks and/or counters. When commencing MPPT, controller 210 may control power converter 208 to apply an initial voltage V-INT across terminals 222-1 and 222-2 of photovoltaic panel 204, and may initialize a plurality of timers (e.g., clocks and/or counters), where each timer corresponds to an MPPT control signal (and therefore, to an MPPT timestep). Controller 210, using measurements from sensor(s) 212 (e.g., of current, voltage, or both) may determine an initial output power from photovoltaic panel 204.

In Figure 3A at time T1, at the end of an MPPT timestep of duration ΔT1 corresponding to MPPT control signal 300, controller 210 may determine the output power from photovoltaic panel 204. Controller 210 may determine, using a previously determined output power, if the power from photovoltaic panel 204 increased or decreased. In the example of Figure 3A, controller 210 may determine, at time T1, that the power decreased relative to the determined initial power. Since time T1 occurs after the first MPPT timestep corresponding to the first MPPT frequency, and controller 210 has no information regarding direction of a previous voltage step at time T0, controller 210 may control power converter 208 change (e.g., increase or decrease) the voltage across terminals 222-1 and 222-2 of photovoltaic panel 204 by a voltage step VS1, which corresponds to MPPT timestep ΔT1 in a default direction. For example, controller 210 may control, by default, power converter 208 to decrease the voltage across terminals 222-1 and 222-2 of photovoltaic panel 204 by a voltage step VS1 (which corresponds to MPPT timestep ΔT1). At time T2, after an MPPT timestep ΔT1, controller 210 may determine that the power from photovoltaic panel decreased relative to the output power determined at time T1. Since at time T1 controller 210 controlled power converter 208 to decrease the voltage across terminals 222-1 and 222-2, controller 210 may control power converter 208 to increase the voltage across terminals 222-1 and 222-2 of photovoltaic panel 204 by a voltage step VS1, which corresponds to MPPT timestep ΔT1.

At time T4, at the end of an MPPT timestep ΔT2, corresponding to MPPT control signal 302, controller 210 may determine that the power from photovoltaic panel decreased, relative to the determined initial power. Since time T4 occurs after the first MPPT timestep corresponding to the second MPPT frequency, and controller 210 has no information regarding direction of a previous voltage step at time T0, controller 210 may control power converter 208 change the voltage across terminals 222-1 and 222-2 of photovoltaic panel 204 by a voltage step VS2, which corresponds to MPPT timestep ΔT2 in a default direction. For example, controller 210 may control, by default, power converter 208 to decrease the voltage across terminals 222-1 and 222-2 of photovoltaic panel 204 by a voltage step VS2, which corresponds to MPPT timestep ΔT2.

At time T8, after an MPPT timestep ΔT2, controller 210 may determine that the power from photovoltaic panel increased relative to the output power determined at time T4. Since at time T4 controller 210 controlled power converter 208 to decrease the voltage across terminals 222-1 and 222-2 of photovoltaic panel 204, controller 210 may control power converter 208 to decrease the voltage across terminals 222-1 and 222-2 again by a voltage step VS2, which corresponds to MPPT timestep ΔT1.

At time T16, at the end of an MPPT timestep ΔT3, corresponding to MPPT control signal 304, controller 210 may determine that the power from photovoltaic panel decreased, relative to the to the determined initial power. Since time T16 occurs after the first MPPT timestep corresponding to the third MPPT frequency, and controller 210 has no information regarding direction of a previous voltage step at time T0, controller 210 may control power converter 208 change the voltage across terminals 222-1 and 222-2 of photovoltaic panel 204 by a voltage step VS3, which corresponds to MPPT timestep ΔT3 in a default direction. For example, controller 210 may control, by default, power converter 208 to decrease the voltage across terminals 222-1 and 222-2 of photovoltaic panel 204 by a voltage step VS3, which corresponds to MPPT timestep ΔT3. At the next time instance after an MPPT step ΔT3 corresponding to third MPPT frequency (T32 - not shown), controller 210 may compare the output power from photovoltaic panel 204 with the output power at T16.

Figure 3A shows an example of three MPPT frequencies, which may be harmonics of one another and may be in phase. Therefore, for example, at time T4, both the first MPPT timestep, ΔT1, and the second MPPT timestep, ΔT2, may end. At time T16, all three MPPT timesteps may end. In such a case, controller 210 may perform the MPPT iteration based on the longer MPPT timestep that ended. In the example of T4, controller 210 may perform the MPPT iteration based MPPT timestep ΔT2 and control power converter 208 to modify the voltage across terminals 222-1 and 222-2 of photovoltaic panel 204 by the corresponding voltage step VS2. In the example of T16, controller 210 may perform the MPPT iteration based MPPT timestep ΔT3 and control power converter 208 to modify the voltage across terminals 222-1 and 222-2 of photovoltaic panel 204 by the corresponding voltage step VS3. According to another example, at time T4, controller 210 may perform an MPPT tracking iteration based MPPT timestep $\Delta T1$ and MPPT timestep $\Delta T2$. Controller 210 may control power converter 208 to modify the voltage across terminals 222-1 and 222-2 of photovoltaic panel 204 by a voltage step corresponding to the sum of the determined voltage steps accounting for the directions of the voltage steps (e.g., applying the difference between the voltage steps if the directions are opposite, in the direction of the higher voltage step, or applying the sum of the voltage steps if the directions are the same).

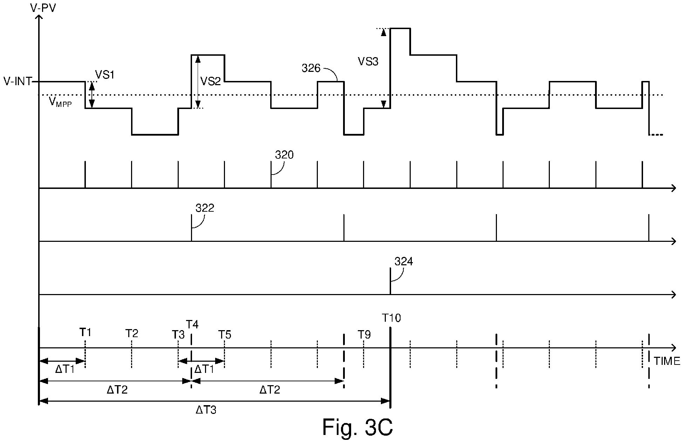

To avoid a case in which more than one MPPT timestep ends at the same time instance, the MPPT control signals may have a phase difference between them. Figure 3B shows an example of three MPPT control signals 310, 312 and 314, which may comprise a phase difference between them. Figure 3B shows an example timing diagram 316 of the voltage across terminals 222-1 and 222-2 of photovoltaic panel 204 which may result from using MPPT control signals 310, 312 and 314. According to another example, the MPPT control signals may have inharmonic frequencies. Figure 3C shows an example of three MPPT control signals 320, 322 and 324 may have inharmonic frequencies. Figure 3C shows a timing diagram 326 of the voltage across terminals 222-1 and 222-2 of photovoltaic panel 204 which may result from using MPPT control signals 320, 322 and 324.

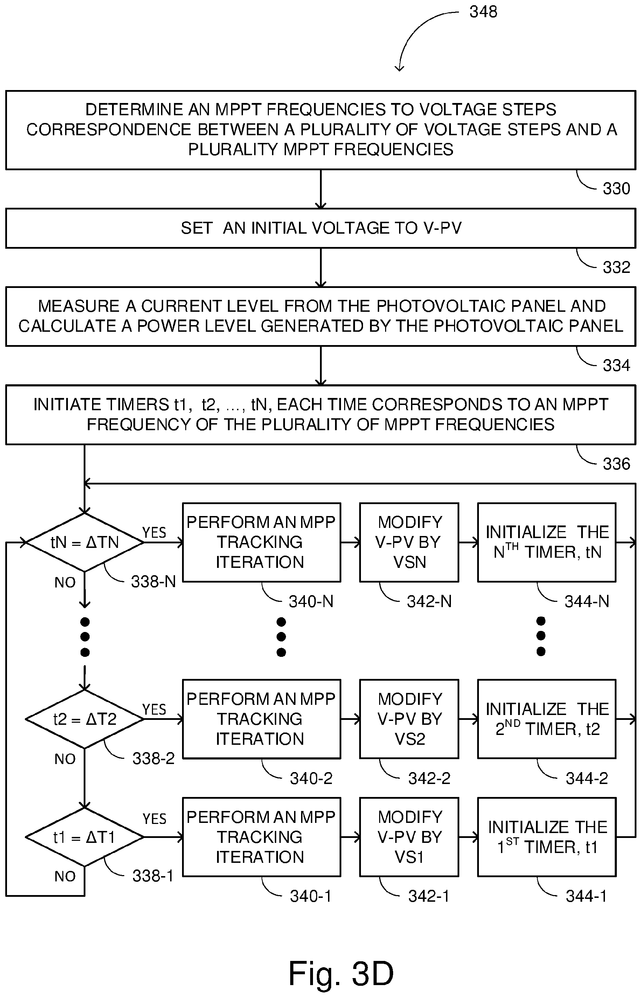

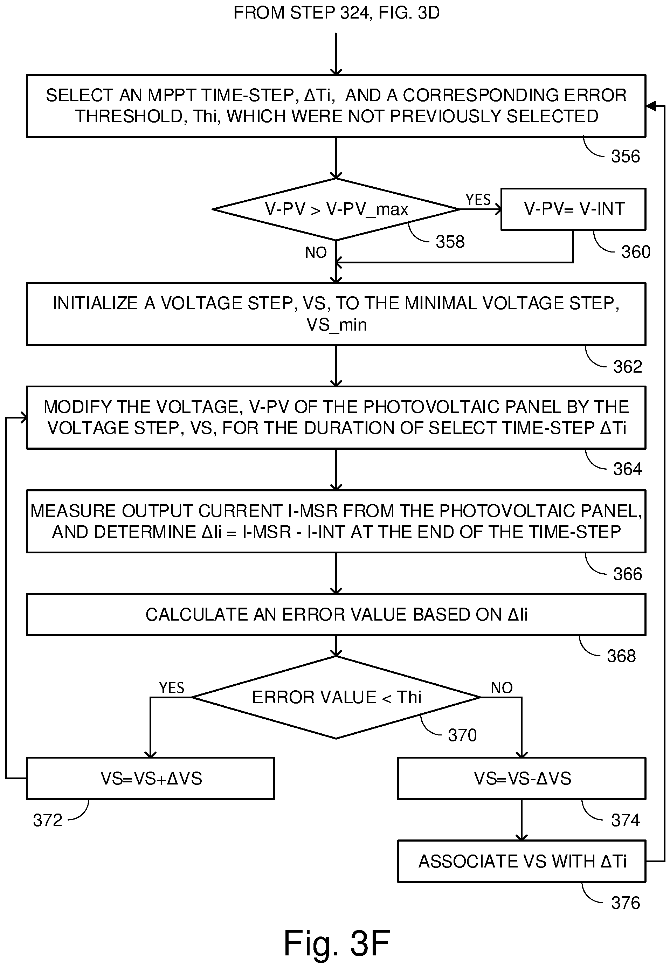

Figure 3D shows an example method 348 for MPPT using voltage steps associated with different MPPT frequencies. At step 330, controller 210 may determine correspondence between a plurality of voltage steps and a plurality MPPT frequencies, which may define an MPPT frequencies to voltage steps correspondence. The MPPT frequencies may be the frequencies of MPPT control signals used by controller 210 to perform MPPT (e.g., MPPT control signals 300, 302, 304 - as described herein in Figure 3A, MPPT control signals 310, 312, 314 - as described herein in Figure 3B). Each MPPT frequency may define a corresponding MPPT timestep $\Delta T1$-$\Delta TN$ (e.g., MPPT timesteps $\Delta T1$-$\Delta T3$ Figures 3A-3C). Determining the MPPT frequencies to voltage steps correspondence is further elaborated herein in conjunction with Figure 3E and 3F. The MPPT frequencies to voltage steps correspondence, and thus the voltage steps to MPPT timesteps correspondence may be implemented by controller 210, for example, by using a lookup table (LUT).

At step 332, controller 210 may control power converter 208 to set an initial voltage level, V-INT, across terminals 222-1 and 222-2 of photovoltaic panel 204. V-INT may be determined arbitrarily. V-INT may be a previously determined MPP voltage of photovoltaic panel 204. V-INT may an approximation of the MPP voltage of photovoltaic panel 204.

At step 334, sensor(s) 212 may measure a current level from photovoltaic panel 204 and controller 210 may calculate a power level generated by photovoltaic panel 204. Thus, controller 210 may determine an output power level from photovoltaic panel 204.

At step 336, controller 210 may initiate timers t1, t2, ..., tN, where each timer corresponds to an MPPT control signal of a plurality of MPPT control signals having a corresponding MPPT frequencies. Thus, each timer t1, t2, ..., tN may be associated with a corresponding MPPT timestep $\Delta T1$-$\Delta TN$. Controller 210 may initiate timers t1, t2, ..., tN at time instances which may be offset by corresponding phase differences between the control signals.

At steps 338-N - 338-1, controller 210 may sequentially compare the elapsed times in each of timers t1-tN, with the corresponding MPPT timestep $\Delta T1$-$\Delta TN$. If the elapsed time is equal to the MPPT timestep, the method may proceed to steps 306-N - 306-1 respectively. Figures 3A-3C show examples of three MPPT frequencies and corresponding MPPT timesteps $\Delta T1$-$\Delta T3$, and corresponding voltage steps VS1-VS3. Controller 210 may determine if MPPT timestep $\Delta T1$, $\Delta T2$ or $\Delta T3$ elapsed.

At steps 340-N - 340-1, for each MPPT timestep that elapsed, controller 210 may perform an MPP tracking iteration to determine a change in power, $\Delta Pi$, relative to a previously determined power from photovoltaic panel 204. For example, in Figure 3A, at time T2, at an end of MPPT timestep $\Delta T1$ corresponding to the first MPPT frequency, controller 210 may determine the change in power from photovoltaic panel 204 relative to the power at time T1. For example, at time T8, the end of MPPT timestep $\Delta T2$ at corresponding to the first MPPT frequency, controller 210 may determine the change in power from photovoltaic panel 204 relative to the power at time T4.

At steps 342-N - 342-1, for each timestep, controller 210 may modify the voltage, V-PV, across terminals 222-1 and 222-2 of photovoltaic panel 204 by the corresponding voltage step. For example, in Figure 3A, at time T1, controller 210 may control converter 208 to modify the V-PV by the voltage step VS1. At time T4, controller 210 may control converter 208 to modifies the V-PV by the voltage step VS2. At time T13, controller 210 may control converter 208 to modify the V-PV by the voltage step VS3.

At steps 344-N - 344-1, the controller 210 may initialize the corresponding timers t1, t2, ..., tN. From steps 344-N - 344-1 the method may return to step 338-N.

In Figures 3A-3D, controller 210 may determine a correspondence between MPPT frequencies and voltage steps. As described herein, each MPPT timestep, corresponding to an MPPT frequency, may be associated with a different error the error between actual and measured power produced by photovoltaic panel 204. Also, since in the example described the voltage across terminals 222-1 and 222-2 of photovoltaic panel 204 is modified, power may be determined by measuring current. Therefore, determining an MPPT frequencies to voltage steps correspondence may be based on an error current corresponding to each MPPT frequency. For example, a plurality of error thresholds may be determined, where an error threshold is associated with a corresponding MPPT timestep. Figures 3E and 3F show example methods for determining a correspondence between MPPT frequencies and voltage steps based on error currents thresholds associated with the MPPT timesteps. When determining the MPPT frequencies to voltage steps correspondence, controller 210 may iterate through a plurality MPPT timesteps and corresponding error thresholds and determine a voltage step which corresponds to each MPPT timestep and corresponding error current. At step 350 controller 210 may determine a plurality of MPPT timesteps $\Delta T1, \Delta T2, ..., \Delta TN$ corresponding to the plurality of MPPT frequencies, a plurality of corresponding error current thresholds Th1, Th2,... ThN, and a voltage step increment, $\Delta Vs$. The association between the plurality of MPPT timesteps and corresponding error current thresholds Th1, Th2,...ThN may be values which may be related to error currents, $\Delta IEs$, and which may be determined, for example, based on the output capacitance of photovoltaic panel 204, estimated current response time of a voltage step, and/or a measured current response time of a voltage step. For example, the error current thresholds Th1, Th2,... ThN may be a relative errors (e.g., an error current relative to a reference current) which may relate to the response of the photovoltaic panel and/or power system 200 using the photovoltaic panel 204. The error current thresholds Th1, Th2,... ThN may be within a range which enables power system 200 to converge on the MPP within a determined time-period and within a determine error.

At step 352 controller 210 may initialize a voltage across terminals 222-1 and 222-2 of photovoltaic panel 204 to an initial voltage, V-INT (e.g., V-PV= V-INT).

At step 354, sensor(s) 212 may measure a current level, I-PV, from photovoltaic panel 204. Controller 210 may determine the measured level of the current flowing from photovoltaic panel 204 as an initial current, I-INT.

At step 356, controller 210 may select an MPPT timestep, $\Delta ti$, and a corresponding error current threshold, Thi, which were not previously selected. In the following steps, the method may associate the selected MPPT timestep $\Delta ti$ with a corresponding voltage step, based on the error current threshold, Thi.

At step 358, controller 210 may compare the voltage, V-PV, across terminals 222-1 and 222-2 of photovoltaic panel 204 to a maximum level, V-PV_max, of the voltage across terminals 222-1 and 222-2. If V-PV exceeds V-PV_max, the method may proceed to step 360. If V-PV does not exceed V-PV_max, the method may proceed to step 362.

At step 360, controller 210 may set the voltage, V-PV, across terminals 222-1 and 222-2 of photovoltaic panel 204 to the initial voltage level V-INT. It is noted that steps 328 and 330 are optional and aim to ensure that the voltage across terminals 222-1 and 222-2 of photovoltaic panel 204 may remain within an operating range. Also, setting V-PV to the initial voltage, V-INT, is brought herein as an example only. According to the disclosure herein, V-PV may be reduced by a determined value.

At step 362, controller 210 may initialize a voltage step, VS, to the minimal voltage step, VS_min (VS=VS_min).

At step 364, controller 210 may control power converter 208 to modify the voltage, V-PV, across terminals 222-1 and 222-2 of photovoltaic panel 204 by voltage step, VS, (V-PV= V-PV + VS), for the duration of the select timestep, $\Delta Ti$.

At step 366, sensor(s) 212 may measure a level of an output current, I-MSR, from the photovoltaic panel, and may determine a difference between the initial current level (I-INT) and the measured current level I-MSR ($\Delta Ii$ = I-INT - I-MSR) at an end of the selected timestep.

At step 368, controller 210 may calculate an error value based on $\Delta Ii$. For example, controller 210 may calculate $\Delta Ii$ based on:

$$Error = \frac{\Delta Ii}{I\text{-}INT} \qquad\qquad (1)$$

At step 370, controller 210 may compare the error value with the error threshold Thi. If the error value is smaller than Thi, the voltage step may be increased, and the method may proceed to step 372. If the error value is larger than Thi, the method may proceed to step 374.

At step 372, the controller 210 may increase the voltage step VS by the voltage step increments $\Delta VS$, (e.g., VS=VS+$\Delta VS$). The method may proceed to step 364.

At step 374, controller 210 may decrease the voltage step VS by the voltage step increments $\Delta VS$, (e.g., VS=VS-$\Delta VS$). Step 374 is optional and is provided to ensure that the voltage step does not exceed the error current threshold. An alternative to step 374 may be to determine lower error current thresholds.

At step 376, controller 210 may associate the voltage, VS, as corresponding to the timestep $\Delta ti$. The method may proceed to step 356.

The MPPT method described above may be used, for example, in systems in which the number of frequencies may be limited (e.g., due to other frequencies used for data communications, clocks limitations, and/or controller), or due to limitation on the voltage step sizes (which may be caused by limitations of an analog to digital converter). Figures 3E-3F show that the MPPT frequencies may be associated with corresponding error thresholds and a search is conducted for a corresponding voltage step. Nevertheless, according to the disclosure herein, in a similar manner, voltage steps may be associated with corresponding error thresholds and a search is conducted for a corresponding MPPT frequency. For example, when determining the MPPT frequencies to voltage steps correspondence, controller 210 may iterate through a plurality voltage steps and corresponding error thresholds and determine an MPPT frequency which corresponds to each voltage step and corresponding error threshold.

## Dynamic Step with Constant Error

An MPPT may be performed using dynamic voltage steps. Each voltage step may be associated with a corresponding MPPT timestep. In cases in which dynamic steps are used, the error current may be equal for all the voltage steps and corresponding MPPT timesteps. When using dynamic step MPPT, the voltage step is determined based on a corresponding power difference (dP). When using dynamic step the voltage step is determined based on the rate of change of the power versus voltage (dP/dV), or the relative change between the current and voltage of the photovoltaic panel ((dI/I)/(dV/V). Figures 4A-4O show example methods for MPPT using dynamic voltage steps associated with different MPPT timesteps and related graphs, as well as a method for determining a correspondence between the voltage steps and the MPPT timesteps.

## MPPT Example

Figures 4A-4C show example diagrams depicting an MPPT using dynamic voltage steps where the voltage steps are associated with different MPPT timesteps. The examples in Figures 4A-4C shows two power differences $\Delta P1$ and $\Delta P1$, two corresponding voltage steps VS1 and VS2 respectively, and two corresponding MPPT timesteps $\Delta T1$ and $\Delta T1$. Initially, at time t0, controller 210 may determine an initial voltage, V-INT, and controls converter 208 to apply V-INT across terminals 222-1 and 222-2 of photovoltaic panel 204. Controller 210 may determine an initial power, P-INT, output from photovoltaic panel 204 (e.g., by using current measurements from sensor(s) 212 and multiplying by V-INT). Controller 210 may also determine an initial timestep. In the example shown in Figures 4A and 4B, the initial timestep is of duration $\Delta T2$ (e.g., a single time unit). It is also noted that power-voltage curve 400 in Fig. 4C is brought herein for explanation purposes only. A power-voltage curve of a perovskite type panel may be different and may depend on the direction of increase or decrease of the voltage.

At time t1, controller 210 may determine an output power from photovoltaic panel 204. Controller 210 may determine that the output power from photovoltaic panel 204 increased by $\Delta P1$, relative to the power at t0 (e.g., relative to P-INT). Since the power at time t1 increased relative to the power at time t0 by $\Delta P1$, controller 210 may determine a to increase the voltage across terminals 222-1 and 222-2 of photovoltaic panel 204 by a voltage step, VS1, which corresponds to $\Delta P1$ (e.g., based on a power differences to voltage steps correspondence). Controller 210 may control power converter 208 to increase the voltage across terminals 222-1 and 222-2. Controller 210 may determine a timestep corresponding to VS1. In the example shown in Figures 4A-4B, controller 210 determines a timestep of duration $\Delta T1$ (e.g., three time units), which corresponds to VS1 (e.g., based on the voltage steps to MPPT timesteps correspondence).

After the MPPT timestep $\Delta T1$, at time t4, controller 210 may determine an output power from photovoltaic panel 204. Controller 210 may determine that the power from photovoltaic panel increased by $\Delta P1$, relative to the power at t1 (e.g., relative to the power at the previous MPPT timestep). Since the power at time t4 increased relative to the power at time t1 by $\Delta P1$, and at time t1 controller 210 increased the voltage across terminals 222-1 and 222-2, controller 210 may determine to increase the voltage across terminals 222-1 and 222-2 of photovoltaic panel 204 again by a voltage step. Controller 210 may determine to increase the voltage across terminals 222-1 and 222-2 by a voltage step, VS1, which corresponds to $\Delta P1$. Controller 210 may control power converter 208 to increase the voltage across terminals 222-1 and 222-2. Controller 210 may determine an MPPT timestep of duration $\Delta T1$, which corresponds to VS1.

At time t7 (e.g., after MPPT timestep $\Delta T1$ which started at t4), controller 210 may determine an output power from photovoltaic panel 204. Controller 210 may determine that the power from photovoltaic panel decreased by less than $\Delta P2$, relative to the power at t4 (e.g., relative to the power at the previous MPPT timestep). Since the power at time t7 decreased relative to the power at time t4 by less than $\Delta P2$, and since at time t4 controller 210 increased the voltage across terminals 222-1 and 222-2, controller 210 may determine a to decrease the voltage across terminals 222-1 and 222-2 of photovoltaic panel 204 by a voltage step, VS2, which corresponds to $\Delta P2$. Controller 210 may control power converter 208 to decrease the voltage across terminals 222-1 and 222-2. Controller 210 may determine a timestep of duration $\Delta T2$, which corresponds to VS2.

At time t8 (e.g., after the MPPT timestep $\Delta T2$), controller 210 may determine an output power from photovoltaic panel 204. Controller 210 may determine that the power from photovoltaic panel increased by $\Delta P2$, relative to the power at t7. Since the power at time t8 increased relative to the power at time t7 by $\Delta P2$, and at time t7 controller 210 decreased the voltage across terminals 222-1 and 222-2, controller 210 may determine to decrease the voltage across terminals 222-1 and 222-2 of photovoltaic panel 204 at time t8. Controller 210 may determine to decrease the voltage across terminals 222-1 and 222-2 by a voltage step, VS2, which corresponds to $\Delta P2$. Controller 210 may control power converter 208 to decrease the voltage across terminals 222-1 and 222-2. Controller 210 may determine an MPPT timestep of duration $\Delta T2$, which corresponds to VS2.

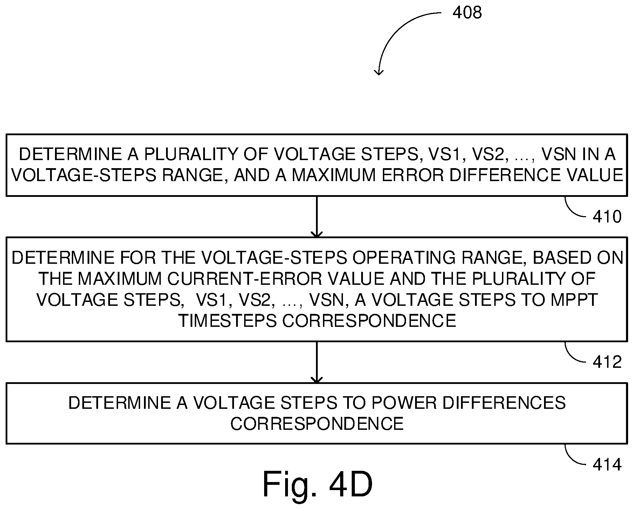

Figure 4D shows an example method 408 for determining various operating characteristics of MPPT using a dynamic step. In Figure 4D, at step 410, controller 210 determines a plurality of voltage steps (e.g., VS1, VS2, ..., VSN) in a voltage range of photovoltaic panel 204 and a current error difference of a current flowing from photovoltaic panel 204. In some examples, the voltage steps may be defined by a minimum voltage step and a maximum voltage step. Additionally, the voltage steps may be determined based on system considerations such as maximum output voltage of photovoltaic panel 204 and/or the minimum and maximum voltages of power converter 208. The current error difference may be determined based on the output capacitance of photovoltaic panel 204, estimated current response time of a voltage step, and/or a measured current response time of a voltage step.

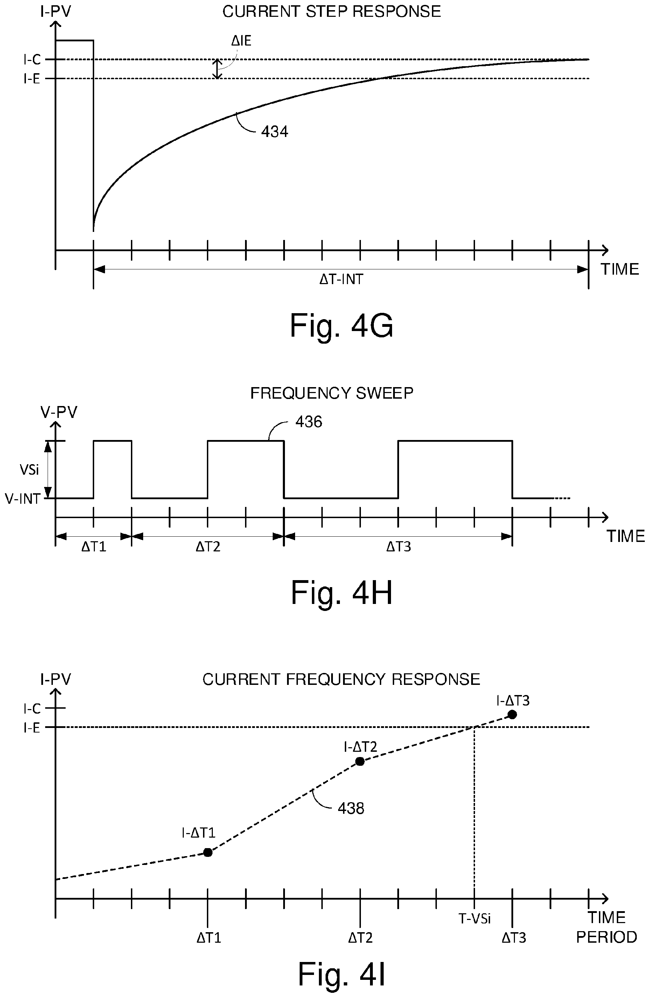

At step 412, controller 210 may determine, for the voltage-step operating range, and based on the current error difference and the plurality of voltage steps, VS1, VS2, ..., VSN, a voltage steps to MPPT timesteps correspondence. Controller 210 determines the voltage steps to MPPT timesteps correspondence using the plurality of voltage steps and the current error difference. Determining the voltage steps to MPPT timesteps correspondence, for MPPT using a dynamic step, is further described herein in conjunction with Figures 4G-4N. The voltage steps to MPPT timesteps correspondence may be implemented by controller 210, for example, by using an LUT.

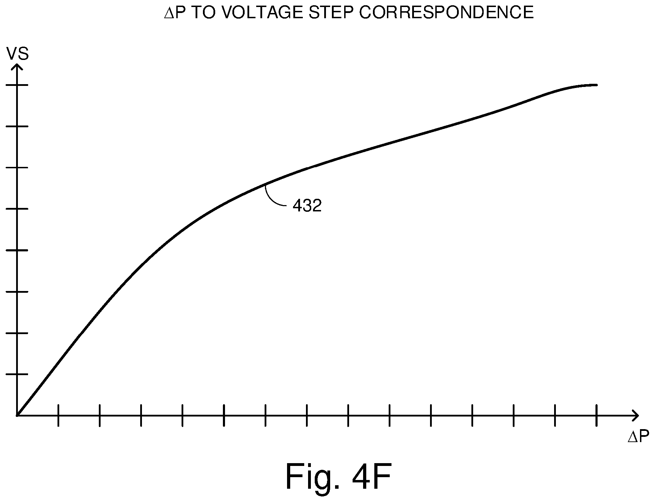

At step 414, controller 210 may determine a power differences, $\Delta Ps$, to voltage steps, VSs, correspondence. An example of such a power differences to voltage steps correspondence may be power differences to voltage steps correspondence 432 shown in Figure 4F. Controller 210 may use this correspondence to determine a dynamic voltage step during the MPPT. The power differences to voltage steps correspondence need not be a linear correspondence and may be based on the power-voltage (P-V) characteristics of photovoltaic panel 204.

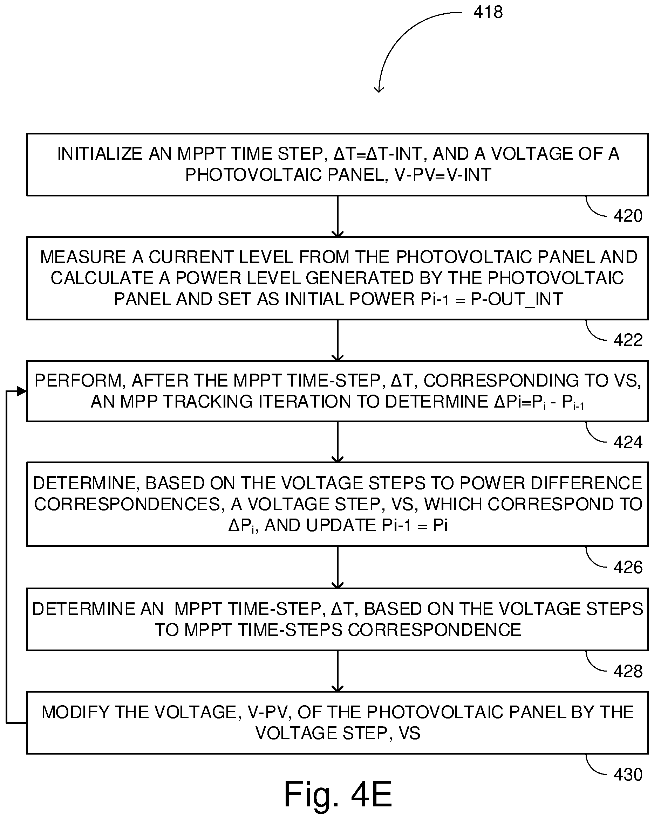

Controller 210 may use the determined voltage steps to MPPT timesteps correspondence and the determined power differences to voltage steps correspondence to track the MPP of photovoltaic panel 204. Figure 4E shows an example method 418 for MPP tracking using a dynamic step and the determined voltage steps to MPPT timesteps correspondence and the determined power differences to voltage steps correspondence. At step 420, controller 210 may initialize the MPPT timestep, $\Delta T$, to an initial MPPT timestep $\Delta T\text{-INT}$ and the voltage, V-PV, across terminals 222-1 and 222-2 of photovoltaic panel 204, V-PV to an initial voltage, V-INT. For example, in Figures 4A-4C, controller 210 may initialize the MPPT timestep to be $\Delta T2$ which is of a duration of one time unit in Figures 4A and 4B (e.g., which may be on the order of milliseconds, microseconds, nanoseconds and the like).

At step 422, sensor(s) 212 may measure a current level from photovoltaic panel 204 and controller 210 may calculate a power level generated by photovoltaic panel 204. Thus, controller 210 may determine an output power level from photovoltaic panel 204. Controller 210 may set the calculated power as an initial power $Pi_{-1} = P\text{-INT}$.

At step 424 controller 210 may perform, after the MPPT timestep $\Delta T$, an MPP tracking iteration to determine a change in power, $\Delta Pi$, relative to a previously determined power from photovoltaic panel 204, $\Delta pi = Pi - Pi_{-1}$. For example, in Figure 4E, at time t1, after an MPPT timestep of $\Delta T2$, controller 210 may determine that the change in power is $\Delta P1$. At time t4, after an MPPT timestep of $\Delta T1$, controller 210 may determine that the change in power is $\Delta P1$. At time t7, after an MPPT timestep of $\Delta T2$, controller 210 may determine that the change in power is $\Delta P2$.

At step 426, controller 210 may determine, based on the change in power, $\Delta pi$, and based on the voltage steps to power differences correspondences, a voltage step, Vsi, which correspond to the determine change in power. Controller 210 may update $Pi_{-1} = Pi$. For example, in Figure 4D, at time t1 controller 210 may determine the voltage step to be VS1 since VS1 corresponds to $\Delta P1$. At time t7 controller 210 may determine the voltage step to be VS2 since VS2 corresponds to $\Delta P2$.

At step 428, controller 210 may determine, based on the voltage steps to MPPT timesteps correspondence, the next MPPT timestep, $\Delta ti$, which corresponds to the voltage step Vsi. For example, in Figures 4A and 4B, at time t1, controller 210 may determine that the next MPPT timestep is $\Delta T1$ which corresponds to VS1. At time t7 controller 210 may determine that the next MPPT timestep is $\Delta T2$ which corresponds to VS2.

At step 430, controller 210 may control power converter 208 to modify the voltage, V-PV, across terminals 222-1 and 222-2 of photovoltaic panel 204 by the voltage step, Vsi. For example, in Figures 4C, at time t1, controller 210 may control power converter 208 to modify V-PV by VS1. At time t7, controller 210 may control power converter 208 to modify V-PV by VS2. The method may proceed to step 424.

Voltage Steps to MPPT timesteps Correspondence

As described herein in Figure 4D, controller 210 may determine, based on an error current, a voltage steps to MPPT timesteps correspondence, in accordance with various embodiments of the disclosure. Figures 4G-4I which may show diagrams related to determining a voltage steps to MPPT timesteps correspondence based on a current error difference, for using in dynamic step MPPT according to the disclosure herein. To determine the voltage steps to MPPT timesteps correspondence controller 210 may control power converter 208 to set the voltage across terminals 222-1 and 222-2 of photovoltaic panel 204, V-PV, to an initial voltage V-INT. Controller 210 may control converter 208 to modify V-PV by a voltage step, Vsi of a plurality of voltage steps, over an initial time-period $\Delta T\text{-INT}$. Time-period $\Delta T\text{-INT}$ may be of a longer duration than the MPPT timesteps.

During $\Delta$T-INT sensor(s) 212 may measure the current levels from photovoltaic panel 204. These measured current levels define a current step response of photovoltaic panel 204 to the voltage step VSi. Figure 4G shows an example of a current step response 434 over an initial time-period $\Delta$T-INT corresponding to VSi. Using the current step response, controller 210 may determine a convergence current level, I-C, to which the current flowing from photovoltaic panel 204 may converge over time, after applying the voltage step. Controller 210 may calculate an error current I-E, based on I-C and a current error difference $\Delta$IE. The error current I-E may be calculated as follows according to some embodiments: I-E = I-C - $\Delta$IE.

After determining I-E, controller 210 performs a frequency sweep with Vsi, to determine a current frequency response for the voltage step. Controller 210 performs the frequency sweep by controlling power converter 208 to modify the voltage across terminals 222-1 and 222-2 of photovoltaic panel 204 by Vsi (e.g., increases the voltage from V-INT to Vsi, and back to V-INT), a plurality of times, each time for a different time-period. The different time-periods may be shorter than the initial time-period $\Delta$T-INT. The different time-periods may be the MPPT timesteps or may be different from the MPPT timesteps. For example, Figure 4H shows a frequency sweep 436 where controller 210 modifies the voltage across terminals 222-1 and 222-2 by Vsi three times, each for a different time-period. Controller 210 may perform the frequency sweep with time periods which are shorter than the initial time-period $\Delta$T-INT since, for example, the capacitance of a perovskite photovoltaic panel may change with the frequency of the voltage steps applied thereto. Therefore, the response of the perovskite photovoltaic panel may differ between the applying the voltage step for the initial time period and applying the voltage step for the plurality of time period of the frequency sweep.

After each time-period in the frequency sweep, sensor(s) measure a current flowing from photovoltaic panel 204 to determine a current frequency response. For example, in Figure 4I, after the first time-period sensor(s) 212 measured a current I-$\Delta$T1. After the second time-period sensor(s) 212 measured a current I-$\Delta$T2. After the third time-period sensor(s) 212 measured a current I-$\Delta$T3. Controller 210 may use the measured current to determine a current frequency response of the output current flowing from photovoltaic panel 204 versus time-period (1/T=f). Figure 4I shows an example where current frequency response 438 is determined from based on the frequency sweep 436 and the determined I-$\Delta$T1, I-$\Delta$T2 and I-$\Delta$T1. Controller 210, using current frequency response 438, may determine a time-period, as the MPPT timestep corresponding to VSi, by identifying a time-period for which the difference between the current corresponding to the time-period (determined from current frequency response 438) and the convergence current, is equal or smaller than current error difference.

Figure 4J shows an example method 439 for determining a voltage steps to MPPT timesteps correspondence based on an error current, to be used in MPPT employing a dynamic step, according to embodiments of the disclosure. At step 440, controller 210 may control power converter 208 to set a voltage, V-PV, across terminals 222-1 and 222-2 of photovoltaic panel 204 to an initial voltage level, V-INT.

At step 442, controller 210 may control converter 208 to modify V-PV by a voltage step, VSi, over an initial time-period $\Delta$T-INT.

At step 444, sensor(s) 212 may measure, over the initial time-period, current levels, I-PV, from photovoltaic panel 204. These measured current levels may define a current step response of photovoltaic panel 204 to the voltage step VSi. An example of such a current step response may be current step response 438 (Figure 4G).

At step 446, controller 210 may determine a convergence current level, I-C, to which the current flowing from photovoltaic panel 204 may converge after applying the voltage step for the initial time-period.

At step 448, controller 210 may calculating, based on the convergence current level and the current error difference, $\Delta$IE, an error current I-E. For example, controller 210 may calculate a difference between the convergence current and the current error difference to determine the error current, I-E = I-C - $\Delta$IE as may be shown in Figure 4G.

At step 450, controller 210 may control power converter 208 to modify V-PV by the voltage step, VSi, a plurality of times, each time for a corresponding time-period, $\Delta$T1, of the plurality of time-periods. Thus, controller 210 performs a frequency sweep with the voltage step VSi. The different time-periods may be shorter than the initial time-period $\Delta$T-INT. The different time-periods may correspond to the MPPT timesteps or may be different from the MPPT timesteps.

At step 452, for each time-period, $\Delta$Ti (e.g., at an end thereof), sensor(s) 212 may measure a corresponding current I- $\Delta$Ti from photovoltaic panel 204. For example, in Figure 4I, after the first time-period sensor(s) 212 measured a current I-$\Delta$T1. After the second time-period sensor(s) 212 measured a current I-$\Delta$T2. After the third time-period sensor(s) 212 measured a current I-$\Delta$T3.

At step 454, using the current measurements corresponding to each time period (e.g., I-$\Delta$T1, I-$\Delta$T2, I-$\Delta$T3 - Figure 4I), controller 210 may determine a current frequency response of the current flowing from photovoltaic panel 204 (e.g., current frequency response 432 - Figure 4I).

At step 456, controller 210, using the current frequency response, may determine a time-period, as the MPPT timestep corresponding to VSi, by identifying a time-period for which the difference between the current corresponding to the time-period and the convergence current, is equal or smaller than current error difference.

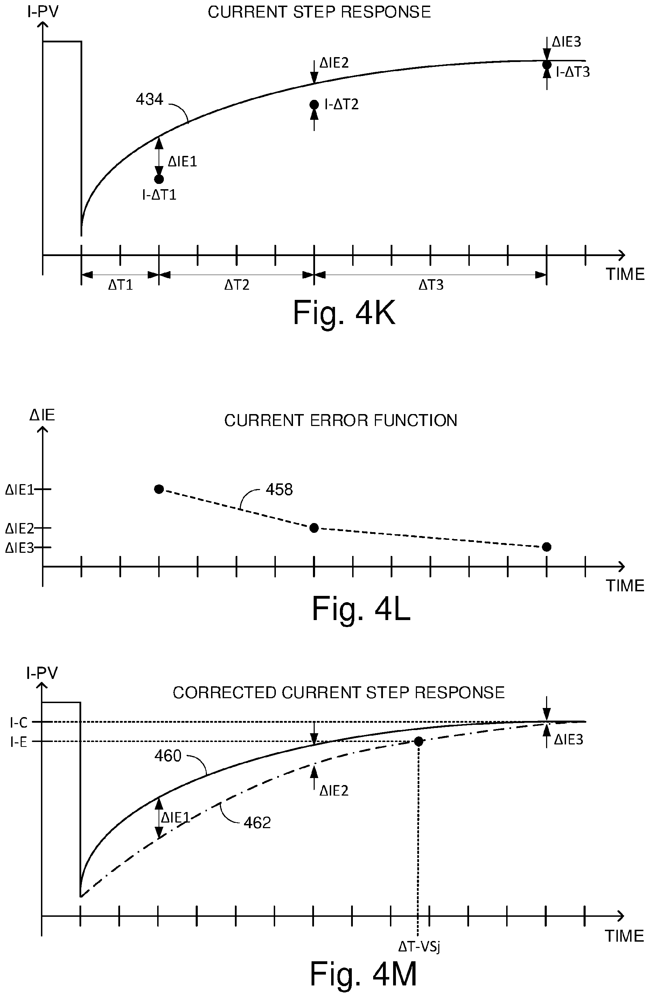

The method described above in conjunction with Figures 4G-4I may be repeated for each voltage step, VSi. In some cases, the frequency sweep for some of the voltage steps may not be necessary, thus reducing the computational complexity of determining the voltage steps to MPPT timesteps correspondence. Additionally, in some cases, a frequency sweep of one voltage step may be sufficient for determining the voltage steps to MPPT timesteps correspondence. To that end, controller 210 may determine a current error function based on the step response and the current frequency response of a first voltage step. Controller 210 may determine a corrected step response for each of the other voltage steps (e.g., by subtracting the current error function from the step response) and determine the MPPT timestep corresponding to the voltage step based on the corrected step response. The current error function corrects the step response for the effects of the frequency of the applied voltage steps on the capacitance of the perovskite panel. Reference is now made to Figures 4K-4N, which may show graphs and method for determining Voltage Steps to MPPT timesteps Correspondence with reduced computational complexity. Figure 4K may show current step response 434 corresponding to a voltage step applied by converter 208 to terminals 222-1 and 222-2 of photovoltaic panel 204, which may also be shown in Figure 4G. Also shown in Figure 4K are current measurements I-$\Delta$T1, I-$\Delta$T2, I-$\Delta$T3, of the currents measured during the frequency sweep, at the corresponding times in the step response of VSi (e.g., VS1 as may be shown in Figures 4H and 4I). Shown in Figure 4K are the current differences $\Delta$IE1, $\Delta$IE3, and $\Delta$IE3, corresponding to the differences between I-$\Delta$T1, I-$\Delta$T2, I-$\Delta$T3 measured during the frequency sweep of VS1, and the current levels measured during step response 434 of VS1 at the corresponding times. As shown in Figure 4L, controller 210 may use $\Delta$IE1, $\Delta$IE3, and $\Delta$IE3 to define a current error function 458 (e.g., by fitting a function to $\Delta$IE1, $\Delta$IE3, and $\Delta$IE3), which may relate to the effects of the dependency of the capacitance of the perovskite panel, on the frequency of the applied voltage steps. Thereafter, in Figure 4M controller 210 may determine a voltage step response (e.g., voltage step response 460) for each of the remaining voltage steps and correct these voltage step responses with the current error function 458 to determine a corrected current step response 462. As shown in the Figure 4M example, controller 210 may determine the corresponding MPPT timestep, $\Delta$T-VSj, based on the time corresponding to the intersection of the error current, I-E, with the corrected step response 462.

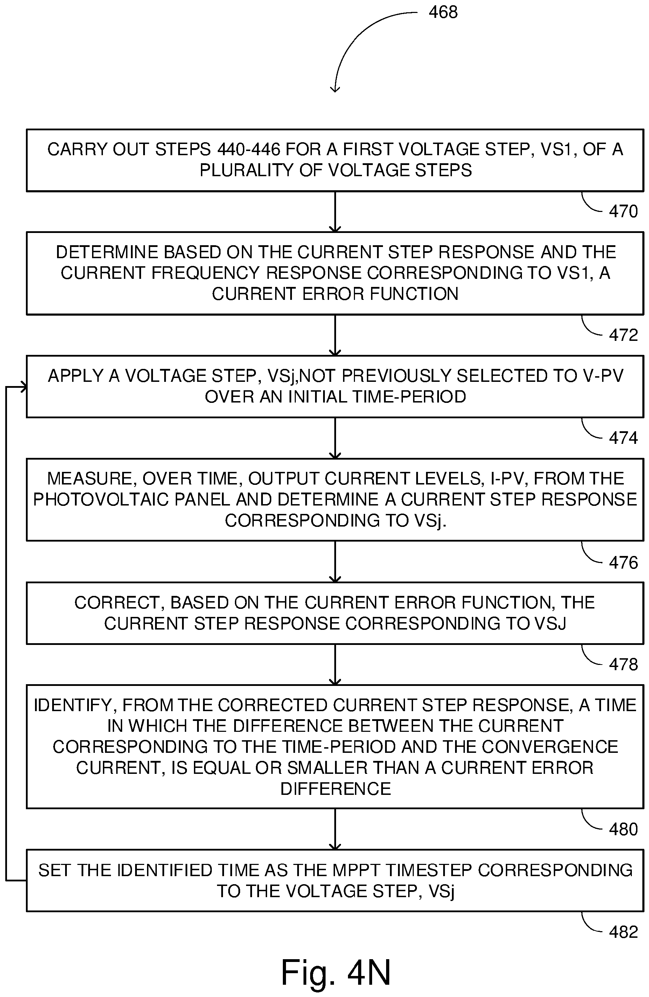

Figure 4N, shows an example method 468 for determining a correspondence between voltage steps to MPPT timesteps with reduced computational complexity. At step 470, controller 210 carries out steps 440-446 of Figure 4J for a first voltage step, VS1.

At step 472, controller 210 may determine, based on the current step response (e.g., current steps response 434 - Figure 4G) and the current frequency response (e.g., current frequency response 438 - Figure 4I) corresponding to VS1, a current error function (e.g., current error function 458 - Figure 4L).

At step 474, controller 210 may control power converter 208 to apply a voltage step, Vsj, not previously selected to V-PV, over an initial time-period.

At step 476, sensor(s) 212 may measure, over time, output current levels, I-PV, from the photovoltaic panel 208, and controller 210 may determine a current step response (e.g., current step response 460 - Figure 4M) corresponding to Vsj, using these current measurements.

At step 478, controller 210 may correct, based on the current error function, the current step response corresponding to VSj, to determine a corrected current step response (e.g., current step response 462 - Figure 4M).

At step 480, controller 210 may identify, from the corrected current step response, a time, in which the difference between the current corresponding to the time-period and the convergence current, is equal or smaller than current error difference.

At step 482, controller 210 may set the identified time as the MPPT timestep, $\Delta$T-VSj, corresponding to the voltage step, Vsj. The method may proceed to step 474.

In the method for determining the voltage steps to MPPT timesteps correspondence described above in conjunction with Figures 4K-4N, controller 210 performs a frequency sweep only once, to determine the effects of dependency of the capacitance of the perovskite panel on MPPT frequency (e.g., the frequency of the applied voltage steps). Thus, the computational complexity of determining the voltage steps to MPPT timesteps correspondence may be reduced. According to the disclosure herein, the computational complexity of determining the voltage steps to MPPT timesteps correspondence may be reduced further. For example, if the duration of the MPPT timesteps corresponds to the level of the voltage steps (e.g., the higher the level of the voltage step the longer the duration of the MPPT timestep), controller 210 may determine the MPPT timesteps corresponding to two voltage steps, and interpolate and/or extrapolate between MPPT timesteps (e.g., using an interpolation function). Figure 4O, shows a method 488 for further reducing the computational complexity of determining a voltage steps to MPPT timesteps correspondence. At step 490 controller 210 may determine a first MPPT timestep corresponding to a first voltage step, VS1. Controller 210 may use the method described in Figures 4G-4J. VS1 may be the largest voltage step of the plurality of voltage steps VS1-VSN (step 410 in Figure 4D).

At step 492 controller 210 may determine a second MPPT timestep corresponding to a second voltage step, VS2. Controller 210 may use the method described in Figures 4G-4J or 4K-4N. VS2 may be the smallest voltage step of the plurality of voltage steps VS1-VSN.

At step 494, for each timestep Vsj other than VS1 and Vs2, controller 210 may determine a corresponding MPPT timestep by interpolating, using an interpolation function, between the first MPPT timestep and the second MPPT timestep corresponding to the first voltage step and the second voltage steps. In various embodiments, the interpolation function may be a linear or non-linear function (e.g., a logarithmic function, a polynomial of degree two or more).

As described above in Figures 2C, 3D, and 4E, controller 210 may perform an MPP tracking iteration to determine a change in power, ΔPi, relative to a previously determined power from photovoltaic panel 204 (e.g., in a previous MPPT timestep). Figure 5 which shows an example 498 method for an MPPT tracking iteration, according to embodiments of the disclosure. At step 500, sensor(s) 212 may measure a level of an output voltage (e.g., the voltage across terminals 222-1 and 222-2) and a level of an output current flowing from a photovoltaic panel.

At step 502, controller 210, may calculate, using the measurements of the level of the output current and the measurements of the level of the output voltage, an output power from the photovoltaic panel (e.g., a present output power).

At step 504, controller 210 may calculate a change in power, Δpi, relative to a previously determined power from photovoltaic panel 204 (e.g., a previous output power determined in a previous MPPT timestep).

Figure 5 shows an example of an MPPT for determining a change in power (dP). An MPPT iteration may be performed using other metrics such as rate of change of the power versus voltage (dP/dV), or the relative change between the current and voltage of the photovoltaic panel ((dI/I)/(dV/V).

One or more aspects of the disclosure may be embodied in computer-usable data and computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects of the disclosure, and such data structures are contemplated within the scope of computer executable instructions and computer-usable data described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Hereinafter, various characteristics will be highlighted in a set of numbered clauses or paragraphs. These characteristics are not to be interpreted as being limiting, but are provided merely as a highlighting of some characteristics as described herein, without suggesting a particular order of importance or relevancy of such characteristics.

Clause 1: A method comprising:

> at a timestep corresponding to an MPPT frequency of a plurality of different MPPT frequencies:

>> determining an output power level from a photovoltaic panel;
>> determining a power difference between the output power level and a previous output power level; and
>> modifying, based on the power difference and based on a voltage steps to MPPT frequencies correspondence, a voltage of the photovoltaic panel by a voltage step corresponding to the MPPT frequency.

Clause 2: The method of clause 1, wherein the determining a power difference comprises:

> calculating an output power from the photovoltaic panel using a measured level of the output current and the voltage of the photovoltaic panel; and
> calculating a change in the output power relative to the previous output power level.

Clause 3: The method of any one of clauses 1-2, further comprising determining the voltage steps to the MPPT frequencies correspondence.

Clause 4: The method of clause 3, wherein determining the voltage steps to MPPT frequencies correspondence comprises:
determining:

> a plurality of different MPPT frequencies and corresponding plurality of error thresholds; and
> a voltage step increment;

initializing the voltage of the photovoltaic panel to an initial voltage;
measuring a level of an initial current flowing from the photovoltaic panel;
modifying the voltage of the photovoltaic panel by the voltage step for a duration of a timestep corresponding to an MPPT frequency;
measuring a level of an output current flowing from the photovoltaic panel;
calculating an error value related to the output current flowing from the photovoltaic panel based on the level of the initial current of the measured level of the output current;
comparing the error value with an error threshold corresponding to the MPPT frequency; and
associating, based on a result of the comparing, the voltage step with the MPPT frequency.

Clause 5: The method of clause 4, wherein the associating is based on the result of the comparing being that the error value is larger than the error threshold.

Clause 6: The method of any one of clauses 4-5, further comprising increasing, based on the result of the comparing being that the error value being lower than the error threshold, the voltage step by the voltage step increment.

Clause 7: The method of any one of clauses 4-6, further comprising:

comparing the level of the voltage of the photovoltaic panel with a maximum level; and
initializing, based on the level of the voltage of the photovoltaic panel being higher than the maximum level, the voltage of the photovoltaic panel to the initial voltage.

Clause 8: The method of any one of clauses 4-7, wherein calculating an error value comprises calculating:

$$\frac{I\text{-}INT - I\text{-}MSR}{I\text{-}INT}$$

wherein *I-INT* is the level of the initial current flowing from the photovoltaic panel and *I-MSR* is the measured level of the output current flowing from the photovoltaic panel.

Clause 9: The method of any one of clauses 1-8, further comprising:

initiating, prior to the determining a power difference, a timer, wherein the timer corresponds to the MPPT frequency;
determining, based on the timer, that the timestep has elapsed; and
wherein the determining the power difference occurs after the time-period corresponding to the frequency elapsed.

Clause 10: The method of clause 9, wherein the initiating of each timer is offset by a corresponding phase difference relative to other timers.

Clause 11: The method of any one of clauses 1-10, wherein the different MPPT frequencies are inharmonic.

Clause 12: A method comprising:

calculating, based on a measurement of an output current level from a photovoltaic panel, a power difference between a present output power from the photovoltaic panel and a previous output power;
determining a voltage step corresponding to the power difference;
determining, based on a correspondence of voltage steps to timesteps, a timestep corresponding to the voltage step; and
modifying the voltage of the photovoltaic panel, by the voltage step, for a duration of the timestep.

Clause 13: The method of clause 12, further comprising

measuring an output current level from the photovoltaic panel,
wherein the previous output power is a power determined in a previous timestep.

Clause 14: The method of any one of clauses 12-13, wherein the determining the voltage step is based on the power difference and a correspondence of power difference to voltage step, and
wherein the method further comprises determining the correspondence of power difference to voltage step.

Clause 15: The method of clause any one of clauses 12-14, further comprises determining, based on a current error difference, the voltage steps to timesteps correspondence.

Clause 16: The method of clause 15, wherein determining the correspondence of voltage steps to timesteps comprises:

determining, for a selected voltage step of a plurality of voltage steps, a current step response of an output current flowing from the photovoltaic panel;
determining a convergence current level to which the output current, from the photovoltaic panel, converges over time;
applying the voltage step a plurality of times, each time for a time-period of a plurality of time-periods;
for each time-period, measuring a corresponding level of the output current flowing from the photovoltaic panel;
determining, based on the corresponding level of the output current of each time-period a current frequency response;
identifying, from the current frequency response, a time-period with a corresponding level of the output current at in which a difference between the current corresponding to the time-period and the convergence current level, is equal or smaller than a current error difference; and
setting the time-period as corresponding to the voltage step.

Clause 17: The method of clause 16, wherein determining the current step response comprises:

modifying an output voltage of the photovoltaic panel by the selected voltage step over an initial time-period; and
measuring levels of the output current flowing from the photovoltaic panels over the initial time-period, the levels of the output current defining the current step response.

Clause 18: The method of any one of clauses 16-17, wherein, determining correspondence of voltage steps to timesteps comprises repeating, for each voltage step of the plurality of voltage steps, from the determining a current step response.

Clause 19: The method of any one of clauses 16-18, wherein determining the correspondence of voltage steps to timesteps further comprises:

determining a correspondence between a first selected voltage step to a timestep;
determining, based on a current step response of the first selected voltage step and a current frequency response of the first selected voltage step, a current error function; and
for each other voltage step of the plurality of voltage steps:

determining a corresponding current step response;
correcting, based on the current error function, the corresponding current step response to determine a corrected current step response;
identify, from the corrected current step response, a time in which the difference between the current corresponding to the time-period and the convergence current level, is equal or smaller than the current error difference; and
setting the identified time as the time-period corresponding to the voltage step.

Clause 20: The method of clause 19, wherein the determining the current error function comprises determining a difference between the current step response and the current frequency response.

Clause 21: The method of any one of clauses 16-20, wherein determining the voltage steps to timesteps correspondence further comprises:

determining a plurality of timesteps corresponding to a plurality of voltage steps; and
fitting a function to the plurality of timesteps corresponding to the plurality of voltage steps.

Clause 22: The method of any one of clauses 16-21, wherein determining the correspondence of voltage steps to time-periods further comprises:

determining a timestep corresponding to a first selected voltage step;
determining a timestep corresponding to a second voltage step; and
for each voltage step, determine a corresponding timestep by interpolating, based on an interpolation function, between the timestep corresponding to the first voltage step and the timestep corresponding to the second voltage step.

Clause 23: The method of any one of clauses 16-22, further comprising determining the plurality of voltage steps for a voltage steps operating range.

Clause 24: A method comprising:

determining a time-periods to voltage step correspondence;
setting:

a timestep to an initial value;
an output voltage of a photovoltaic panel to an initial voltage level; and

at an end of the timestep, performing and MPP tracking iteration; and
determine a voltage step and a corresponding timestep based on the MPP tracking iteration.

Clause 25: An apparatus comprising:

a power converter configured to convert power between first terminals and second terminals, wherein the first terminals are for coupling to a photovoltaic panel;
a sensor, configured to measure an output current; and
a controller configured to:
at a timestep corresponding to an MPPT frequency of a plurality of different MPPT frequencies:

determine an output power level from a photovoltaic panel based on a measurement from the sensor;
determine a power difference between the output power level and a previous output power level; and
control the power converter to modifying, based on the power difference and based on a voltage steps to MPPT frequencies correspondence, the voltage across the first terminals by a voltage step corresponding to the MPPT frequency.

Clause 26: The apparatus of clause 25, wherein the sensor is configured to measure a level of an output current, and wherein the controller determines the power difference by:

calculating an output power from the photovoltaic panel using the measured level of the output current and the voltage of the photovoltaic panel; and
calculating a change in the output power relative to the previous output power level.

Clause 27: The apparatus of any one of clauses 25-26, wherein the controller is further configured to determining a voltage steps to the MPPT frequencies correspondence.

Clause 28: The apparatus of clause 27, wherein the controller is configured to determine the voltage steps to MPPT frequencies correspondence by:
determining:

a plurality of different frequencies and corresponding plurality of error thresholds; and
a voltage step increment;

initializing the voltage of the photovoltaic panel to an initial voltage;
measuring a level of an initial current flowing from the photovoltaic panel;
modifying the voltage of the photovoltaic panel by the voltage step for a duration of a timestep corresponding to an MPPT frequency;

measuring a level of an output current flowing from the photovoltaic panel;

calculating an error value related to the output current flowing from the photovoltaic panel based on the level of the initial current of the measured level of the output current;

comparing the error value with the an error threshold corresponding to the MPPT frequency; and

associating, based on the result of the comparing, the voltage step with the MPPT frequency.

Clause 29: The apparatus of clause 28, wherein the controller associates, based on the result of the comparing being that the error value is larger than the error threshold, the voltage step with the MPPT frequency.

Clause 30: The apparatus of any one of clauses 28-29, wherein, the controller is configured to, based on the result of the comparing being that the error value is lower than the error threshold, increase the voltage step by the voltage step increment.

Clause 31: The apparatus of any one of clauses 28-30, wherein the controller is further configured to:

compare the level of the voltage of the photovoltaic panel with a maximum level; and

initialize, based on the level of the voltage the voltage of the photovoltaic panel being higher than the maximum level, the voltage of the photovoltaic panel to the initial voltage.

Clause 32: The apparatus of any one of clauses 28-31, wherein the controller is configured to calculate an error value based on:

$$\frac{I\text{-}INT - I\text{-}MSR}{I\text{-}INT}$$

wherein $I\text{-}INT$ is the level of the initial current flowing from the photovoltaic panel and $I\text{-}MSR$ is the measured level of the output current flowing from the photovoltaic panel.

Clause 33: The apparatus of any one of clauses 25-32, wherein the controller is further configured to:

initiate, prior to the determining a power difference, a timer, wherein the timer corresponds to the MPPT frequency;

determine, based on the timer, that the timestep has elapsed; and

wherein the controller determines the power difference after the time-period corresponding to the MPPT frequency elapsed.

Clause 34: The apparatus of clause 33, wherein the controller initiate each timer by an offset corresponding to a phase difference relative to other timers.

Clause 35: The apparatus of any one of clauses 25-34, wherein the different MPPT frequencies are inharmonic.

Clause 36: An apparatus comprising:

a power converter configured to convert power between first terminals and second terminals, wherein the first terminals are for coupling to a photovoltaic panel;

a sensor configured to measure an output current level from the photovoltaic panels at the first terminals; and

a controller configured to:

calculate, based at least on the measurement of the output current level from a photovoltaic panel, a power difference between a present output power from the photovoltaic panel and a previous output power;

determine a voltage step corresponding to the power difference;

determine a timestep corresponding to the voltage step; and

control the power converter to modify the voltage at the first terminals by the voltage step for a duration of the timestep.

Clause 37: The apparatus of clause 36, wherein the sensor is configured to measure an output current level from the photovoltaic panel, and

wherein the controller determines the previous output power based on a power determined in a previous timestep.

Clause 38: The apparatus of any one of clauses 36-37, wherein the controller is further configured to determine the voltage step based on the power difference and a correspondence of power difference to voltage step, and wherein the control is configured to determine the correspondence of power difference to voltage step.

Clause 39: The apparatus of any one of clauses 36-38, wherein the controller is further configured to determine the correspondence of voltage steps to timesteps.

Clause 40: The apparatus of clause 39, wherein the controller is configured to determine the correspondence of voltage steps to timesteps by:

determining, for a selected voltage step of a plurality of voltage steps, a current step response of an output current flowing from the photovoltaic panel;
determining a convergence current level to which the output current, from the photovoltaic panel, converges over time;
controlling the power converter to apply the voltage step a plurality of times, each time for a time-period of a plurality of time-periods;
for each time-period, receiving a measurement from the sensor corresponding ot a level of the output current flowing from the photovoltaic panel;
determining, based on the corresponding level of the output current of each time-period a current frequency response;
identifying, from the current frequency response, a time-period with a corresponding level of the output current at in which a difference between the current corresponding to the time-period and the convergence current level, is equal or smaller than a current error difference; and
setting the time-period as corresponding to the voltage step.

Clause 41: The apparatus of clause 40, the controller is configured to determine the current step response by:

controlling the power converter to modify a voltage of the photovoltaic panel by the selected voltage step over an initial time-period; and
receive, from the sensor, measurements of the levels of the output current flowing from the photovoltaic panels over the initial time-period, the levels of the output current defining the current step response.

Clause 42: The apparatus of any one of clauses 40-41, wherein the controller is configured to determine the correspondence of voltage steps to timesteps comprises repeating, for each voltage step of the plurality of voltage steps, from the determining a current step response.

Clause 43: The apparatus of any one of clauses 40-42, wherein, the controller is configured to determine the correspondence of voltage steps to timesteps further by:

determining a correspondence between a first selected voltage step to a timestep;
determining, based on a current step response of the first selected voltage step and a current frequency response of the first selected voltage step, a current error function; and
for each other voltage step of the plurality of voltage steps:

determining a corresponding current step response;
correcting, based on the current error function, the corresponding current step response to determine a corrected current step response;
identify, from the corrected current step response, a time in which the difference between the current corresponding to the time-period and the convergence current level, is equal or smaller than the current error difference; and
setting the identified time as the time-period corresponding to the voltage step.

Clause 44: The apparatus of clause 43, wherein the, the controller is configured to determine the current error function by determining a difference between the current step response and the current frequency response.

Clause 45: The apparatus of any one of clauses 40-44, the controller is configured to determine the correspondence of voltage steps to time-periods further by:

determining a plurality of timesteps corresponding to a plurality of voltage steps; and
fitting a function to the plurality of timesteps corresponding to the plurality of voltage steps.

Clause 46: The apparatus of any one of clauses 40-45, wherein, the controller is configured to determine the correspondence of voltage steps to time-periods further by:

determining a step corresponding to a first selected voltage step;
determining a step corresponding to a second voltage step; and
for each voltage step, determine a corresponding timestep by interpolating, based on an interpolation function, between the timestep corresponding to the first voltage step and the timestep corresponding to the second voltage step.

Clause 47: The apparatus of any one of clauses 40-46, further, the controller is configured to determine the plurality of voltage steps for a voltage steps operating range.

**Claims**

1.  A method comprising:

    calculating, based on a measurement of an output current level from a photovoltaic panel, a power difference between a present output power from the photovoltaic panel and a previous output power;
    determining a voltage step corresponding to the power difference;
    determining, based on a correspondence of voltage steps to timesteps, a timestep corresponding to the voltage step; and
    modifying the voltage of the photovoltaic panel, by the voltage step, for a duration of the timestep.

2.  The method of claim 1, wherein the determining the voltage step is based on the power difference and a correspondence of power difference to voltage step, and
    wherein the method further comprises determining the correspondence of power difference to voltage step.

3.  The method of claim any one of claims 1-2, further comprises determining, based on a current error difference, the voltage steps to timesteps correspondence.

4.  The method of claim 3, wherein determining the correspondence of voltage steps to timesteps comprises:

    determining, for a selected voltage step of a plurality of voltage steps, a current step response of an output current flowing from the photovoltaic panel;
    determining a convergence current level to which the output current, from the photovoltaic panel, converges over time;
    applying the voltage step a plurality of times, each time for a time-period of a plurality of time-periods;
    for each time-period, measuring a corresponding level of the output current flowing from the photovoltaic panel;
    determining, based on the corresponding level of the output current of each time-period a current frequency response;
    identifying, from the current frequency response, a time-period with a corresponding level of the output current at in which a difference between the current corresponding to the time-period and the convergence current level, is equal or smaller than a current error difference; and
    setting the time-period as corresponding to the voltage step,

    wherein determining the current step response comprises:

    modifying an output voltage of the photovoltaic panel by the selected voltage step over an initial time-period; and
    measuring levels of the output current flowing from the photovoltaic panels over the initial time-period, the levels of the output current defining the current step response,
    wherein, determining the correspondence of voltage steps to timesteps comprises repeating, for each voltage step of the plurality of voltage steps, from the determining a current step response.

5. The method of claim 4, wherein determining the correspondence of voltage steps to timesteps further comprises:

determining a correspondence between a first selected voltage step to a timestep;
determining, based on a current step response of the first selected voltage step and a current frequency response of the first selected voltage step, a current error function; and
for each other voltage step of the plurality of voltage steps:

determining a corresponding current step response;
correcting, based on the current error function, the corresponding current step response to determine a corrected current step response;
identify, from the corrected current step response, a time in which the difference between the current corresponding to the time-period and the convergence current level, is equal or smaller than the current error difference; and
setting the identified time as the time-period corresponding to the voltage step.

6. The method of claim 5, wherein the determining the current error function comprises determining a difference between the current step response and the current frequency response.

7. The method of any one of claims 4-6, wherein determining the correspondence of voltage steps to timesteps correspondence further comprises:

determining a plurality of timesteps corresponding to a plurality of voltage steps; and
fitting a function to the plurality of timesteps corresponding to the plurality of voltage steps.

8. The method of any one of claims 4-7, wherein determining the correspondence of voltage steps to time-periods further comprises:

determining a timestep corresponding to a first selected voltage step;
determining a timestep corresponding to a second voltage step; and
for each voltage step, determine a corresponding timestep by interpolating, based on an interpolation function, between the timestep corresponding to the first voltage step and the timestep corresponding to the second voltage step.

9. An apparatus comprising:

a power converter configured to convert power between first terminals and second terminals, wherein the first terminals are for coupling to a photovoltaic panel;
a sensor configured to measure an output current level from the photovoltaic panels at the first terminals; and
a controller configured to:

calculate, based at least on the measurement of the output current level from a photovoltaic panel, a power difference between a present output power from the photovoltaic panel and a previous output power;
determine a voltage step corresponding to the power difference;
determine a timestep corresponding to the voltage step; and
control the power converter to modify the voltage at the first terminals by the voltage step for a duration of the timestep.

10. The apparatus of claim 9, wherein the controller is further configured to determine the voltage step based on the power difference and a correspondence of power difference to voltage step, and
wherein the control is configured to determine the correspondence of power difference to voltage step.

11. The apparatus of any one of claims 9-10, wherein the controller is further configured to determine the correspondence of voltage steps to timesteps.

12. The apparatus of claim 11, wherein the controller is configured to determine the correspondence of voltage steps to timesteps by:

determining, for a selected voltage step of a plurality of voltage steps, a current step response of an output current flowing from the photovoltaic panel;

determining a convergence current level to which the output current, from the photovoltaic panel, converges over time;

controlling the power converter to apply the voltage step a plurality of times, each time for a time-period of a plurality of time-periods;

for each time-period, receiving a measurement from the sensor corresponding ot a level of the output current flowing from the photovoltaic panel;

determining, based on the corresponding level of the output current of each time-period a current frequency response;

identifying, from the current frequency response, a time-period with a corresponding level of the output current at in which a difference between the current corresponding to the time-period and the convergence current level, is equal or smaller than a current error difference; and

setting the time-period as corresponding to the voltage step,

wherein the controller is configured to determine the current step response by:

controlling the power converter to modify a voltage of the photovoltaic panel by the selected voltage step over an initial time-period; and

receive, from the sensor, measurements of the levels of the output current flowing from the photovoltaic panels over the initial time-period, the levels of the output current defining the current step response,

wherein the controller is configured to determine the correspondence of voltage steps to timesteps comprises repeating, for each voltage step of the plurality of voltage steps, from the determining a current step response.

13. The apparatus of claim 12, wherein, the controller is configured to determine the correspondence of voltage steps to timesteps further by:

determining a correspondence between a first selected voltage step to a timestep;

determining, based on a current step response of the first selected voltage step and a current frequency response of the first selected voltage step, a current error function; and

for each other voltage step of the plurality of voltage steps:

determining a corresponding current step response;

correcting, based on the current error function, the corresponding current step response to determine a corrected current step response;

identify, from the corrected current step response, a time in which the difference between the current corresponding to the time-period and the convergence current level, is equal or smaller than the current error difference; and

setting the identified time as the time-period corresponding to the voltage step,

wherein the, the controller is configured to determine the current error function by determining a difference between the current step response and the current frequency response.

14. The apparatus of any one of claims 12-13, the controller is configured to determine the correspondence of voltage steps to time-periods correspondence further by:

determining a plurality of timesteps corresponding to a plurality of voltage steps; and

fitting a function to the plurality of timesteps corresponding to the plurality of voltage steps.

15. The apparatus of any one of claims 12-14, wherein, the controller is configured to determine the correspondence of voltage steps to time-periods correspondence further by:

determining a step corresponding to a first selected voltage step;

determining a step corresponding to a second voltage step; and

for each voltage step, determine a corresponding timestep by interpolating, based on an interpolation function, between the timestep corresponding to the first voltage step and the timestep corresponding to the second voltage step.

Fig. 1A

FORWARD SCAN VS REVERSE SCAN

Fig. 1B

Fig. 2A

Fig. 2B

248

DETERMINE A VOLTAGE STEPS TO MPPT TIME-STEPS CORRESPONDENCE BETWEEN A PLURALITY OF VOLTAGE STEPS AND A PLURALITY OF MPPT TIME-STEPS

250

SET AN INITIAL V-PV AND AN INITIAL MPPT TIMESTEP

252

MEASURE A CURRENT LEVEL FROM THE PHOTOVOLTAIC PANEL AND CALCULATE A POWER LEVEL GENERATED BY THE PHOTOVOLTAIC PANEL

254

AT AN END OF THE MPPT TIME-STEP, PERFORM AN MPP TRACKING ITERATION

256

DETERMINE A VOLTAGE STEP AND A CORRESPONDING MPPT TIME-STEP BASED ON THE MPP TRACKING ITERATION AND THE VOLTAGE STEPS TO TIME-STEPS CORRESPONDENCE

258

MODIFY V-PV BY THE VOLTAGE STEP

260

Fig. 2C

Fig. 2D

Fig. 3A

Fig. 3B

Fig. 3C

348

| DETERMINE AN MPPT FREQUENCIES TO VOLTAGE STEPS CORRESPONDENCE BETWEEN A PLURALITY OF VOLTAGE STEPS AND A PLURALITY MPPT FREQUENCIES |
|---|

330

| SET AN INITIAL VOLTAGE TO V-PV |
|---|

332

| MEASURE A CURRENT LEVEL FROM THE PHOTOVOLTAIC PANEL AND CALCULATE A POWER LEVEL GENERATED BY THE PHOTOVOLTAIC PANEL |
|---|

334

| INITIATE TIMERS t1, t2, ..., tN, EACH TIME CORRESPONDS TO AN MPPT FREQUENCY OF THE PLURALITY OF MPPT FREQUENCIES |
|---|

336

$tN = \Delta TN$  YES → PERFORM AN MPP TRACKING ITERATION → MODIFY V-PV BY VSN → INITIALIZE THE $N^{TH}$ TIMER, tN

NO  338-N      340-N      342-N      344-N

$t2 = \Delta T2$  YES → PERFORM AN MPP TRACKING ITERATION → MODIFY V-PV BY VS2 → INITIALIZE THE $2^{ND}$ TIMER, t2

NO  338-2      340-2      342-2      344-2

$t1 = \Delta T1$  YES → PERFORM AN MPP TRACKING ITERATION → MODIFY V-PV BY VS1 → INITIALIZE THE $1^{ST}$ TIMER, t1

NO  338-1      340-1      342-1      344-1

Fig. 3D

DETERMINE A PLURALITY OF MPPT TIME-STEPS ΔT1,ΔT2,..., ΔTN CORRESPONDING TO THE PLURALITY OF MPPT FREQUENCIES, A PLURALITY OF CORRESPONDING ERROR THRESHOLDS Th1, Th2,...ThN, AND A VOLTAGE STEP INCREMENT, ΔVS

350

INITIALIZE THE VOLTAGE OF THE PHOTOVOLTAIC PANEL, V-PV, TO AN INITIAL VOLTAGE, V-INT

352

MEASURE A CURRENT, I-PV, OUTPUT FROM THE PHOTOVOLTAIC PANEL AND DETERMINE THE MEASURED CURRENT AS AN INITIAL CURRENT, I-INT

354

TO STEP 326, FIG. 3E

# Fig. 3E

FROM STEP 324, FIG. 3D

SELECT AN MPPT TIME-STEP, ΔTi, AND A CORRESPONDING ERROR THRESHOLD, Thi, WHICH WERE NOT PREVIOUSLY SELECTED

356

V-PV > V-PV_max — YES → V-PV= V-INT

358 NO

360

INITIALIZE A VOLTAGE STEP, VS, TO THE MINIMAL VOLTAGE STEP, VS_min

362

MODIFY THE VOLTAGE, V-PV OF THE PHOTOVOLTAIC PANEL BY THE VOLTAGE STEP, VS, FOR THE DURATION OF SELECT TIME-STEP ΔTi

364

MEASURE OUTPUT CURRENT I-MSR FROM THE PHOTOVOLTAIC PANEL, AND DETERMINE ΔIi = I-MSR - I-INT AT THE END OF THE TIME-STEP

366

CALCULATE AN ERROR VALUE BASED ON ΔIi

368

YES ← ERROR VALUE < Thi → NO

370

VS=VS+ΔVS

372

VS=VS-ΔVS

374

ASSOCIATE VS WITH ΔTi

376

Fig. 3F

Fig. 4A

Fig. 4B

Fig. 4C

408

DETERMINE A PLURALITY OF VOLTAGE STEPS, VS1, VS2, ..., VSN IN A
VOLTAGE-STEPS RANGE, AND A MAXIMUM ERROR DIFFERENCE VALUE

410

DETERMINE FOR THE VOLTAGE-STEPS OPERATING RANGE, BASED ON
THE MAXIMUM CURRENT-ERROR VALUE AND THE PLURALITY OF
VOLTAGE STEPS, VS1, VS2, ..., VSN, A VOLTAGE STEPS TO MPPT
TIMESTEPS CORRESPONDENCE

412

DETERMINE A VOLTAGE STEPS TO POWER DIFFERENCES
CORRESPONDENCE

414

# Fig. 4D

418

INITIALIZE AN MPPT TIME STEP, ΔT=ΔT-INT, AND A VOLTAGE OF A PHOTOVOLTAIC PANEL, V-PV=V-INT

420

MEASURE A CURRENT LEVEL FROM THE PHOTOVOLTAIC PANEL AND CALCULATE A POWER LEVEL GENERATED BY THE PHOTOVOLTAIC PANEL AND SET AS INITIAL POWER $P_{i-1}$ = P-OUT_INT

422

PERFORM, AFTER THE MPPT TIME-STEP, ΔT, CORRESPONDING TO VS, AN MPP TRACKING ITERATION TO DETERMINE $\Delta P_i = P_i - P_{i-1}$

424

DETERMINE, BASED ON THE VOLTAGE STEPS TO POWER DIFFERENCE CORRESPONDENCES, A VOLTAGE STEP, VS, WHICH CORRESPOND TO $\Delta P_i$, AND UPDATE $P_{i-1}$ = Pi

426

DETERMINE AN MPPT TIME-STEP, ΔT, BASED ON THE VOLTAGE STEPS TO MPPT TIME-STEPS CORRESPONDENCE

428

MODIFY THE VOLTAGE, V-PV, OF THE PHOTOVOLTAIC PANEL BY THE VOLTAGE STEP, VS

430

Fig. 4E

ΔP TO VOLTAGE STEP CORRESPONDENCE

VS

432

ΔP

Fig. 4F

CURRENT STEP RESPONSE

I-PV

I-C

I-E

$\Delta$IE

434

$\Delta$T-INT

TIME

## Fig. 4G

FREQUENCY SWEEP

V-PV

436

VSi

V-INT

$\Delta$T1   $\Delta$T2   $\Delta$T3

....

TIME

## Fig. 4H

CURRENT FREQUENCY RESPONSE

I-PV

I-C

I-E

I-$\Delta$T3

I-$\Delta$T2

438

I-$\Delta$T1

$\Delta$T1   $\Delta$T2   T-VSi   $\Delta$T3

TIME
PERIOD

## Fig. 4I

439

SET A VOLTAGE, V-PV, OF A PHOTOVOLTAIC PANEL TO AN INITIAL
VOLTAGE LEVEL, V-INT

440

MODIFY V-PV BY A VOLTAGE STEP, VSi, OVER AN INITIAL TIME-PERIOD

442

MEASURE, OVER TIME, CURRENT LEVELS, I-PV, FROM THE
PHOTOVOLTAIC PANEL, THE OUTPUT CURRENT LEVELS DEFINING A
CURRENT STEP RESPONSE TO THE VOLTAGE STEP

444

DETERMINE A CONVERGENCE CURRENT LEVEL, I-CONV

446

CALCULATING, BASED ON THE CONVERGENCE CURRENT LEVEL AND
THE MAXIMUM CURRENT ERROR VALUE AN ERROR CURRENT

448

MODIFY V-PV BY THE VOLTAGE STEP A PLURALITY OF TIMES, EACH
TIME FOR A CORRESPONDING TIME-PERIOD OF THE PLURALITY OF
TIME-PERIODS

450

FOR EACH TIME-PERIOD, MEASURE A CORRESPONDING I-PV

452

DETERMINE AN OUTPUT CURRENT FREQUENCY RESPONSE

454

DETERMINE, USING THE CURRENT FREQUENCY RESPONSE A
TIME-PERIOD, AS THE MPPT TIMESTEP CORRESPONDING TO VSi, BY
IDENTIFYING A TIME-PERIOD IN WHICH THE DIFFERENCE BETWEEN
THE CURRENT CORRESPONDING TO THE TIME-PERIOD AND THE
CONVERGENCE CURRENT, IS EQUAL OR SMALLER THAN A CURRENT
ERROR DIFFERENCE.

456

Fig. 4J

I-PV

CURRENT STEP RESPONSE

ΔIE3

ΔIE2

I-ΔT3

434

I-ΔT2

ΔIE1

I-ΔT1

ΔT1    ΔT2    ΔT3    TIME

## Fig. 4K

ΔIE

CURRENT ERROR FUNCTION

ΔIE1

458

ΔIE2

ΔIE3

TIME

## Fig. 4L

I-PV

CORRECTED CURRENT STEP RESPONSE

I-C

I-E

ΔIE3

460

ΔIE2

ΔIE1

462

ΔT-VSj    TIME

## Fig. 4M

Fig. 4N

488

DETERMINE FIRST MPPT TIMESTEP CORRESPONDING TO A FIRST VOLTAGE STEP, VS1

490

DETERMINE A SECOND TIMESTEP CORRESPONDING TO A SECOND VOLTAGE STEP, VS2

492

FOR EACH TIME STEP VSj DETERMINE A CORRESPONDING MPPT TIMESTEP BY INTERPOLATING, USING AN INTERPOLATION FUNCTION, BETWEEN THE FIRST MPPT TIMESTEP AND THE SECOND MPPT TIMESTEP CORRESPONDING TO THE FIRST VOLTAGE STEP AND THE SECOND VOLTAGE STEPS

494

## Fig. 4O

498

MEASURE A LEVEL OF AN OUTPUT VOLTAGE AND A LEVEL OF AN OUTPUT CURRENT FROM A PHOTOVOLTAIC PANEL

500

CALCULATE, USING THE MEASUREMENTS OF THE LEVEL OF THE OUTPUT CURRENT AND THE MEASUREMENTS OF THE LEVEL OF THE OUTPUT VOLTAGE, AN OUTPUT POWER FROM THE PHOTOVOLTAIC PANEL

502

CALCULATE A CHANGE IN POWER, ΔPi, RELATIVE TO A PREVIOUSLY DETERMINED POWER FROM THE PHOTOVOLTAIC PANEL

504

## Fig. 5

Europäisches
Patentamt
European
Patent Office
Office européen
des brevets

# EUROPEAN SEARCH REPORT

**Application Number**

EP 24 21 8146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MISHRA JYOTISMITA ET AL: "A novel auto-tuned adaptive frequency and adaptivestep-size incremental conductance MPPT algorithmfor photovoltaic system", INTERNATIONAL TRANSACTIONS ON ELECTRICAL ENERGY SYSTEMS, vol. 31, no. 10, 10 February 2021 (2021-02-10), XP093270817, ISSN: 2050-7038, DOI: 10.1002/2050-7038.12813 Retrieved from the Internet: URL:https://onlinelibrary.wiley.com/doi/full-xml/10.1002/2050-7038.12813> | 1-3,9-11 | INV. G05F1/67 |
| A | * the whole document * | 4-8, 12-15 | |
| A | CN 116 700 427 A (YANTAI ENGINEERING UNIV RESEARCH INSTITUTE) 5 September 2023 (2023-09-05) * paragraph [0053] - paragraph [0099]; figures 1-3 * | 1-15 | |

- - - - -

- - - - -

**TECHNICAL FIELDS SEARCHED (IPC)**

G05F
H02J

The present search report has been drawn up for all claims

| Place of search | Date of completion of the search | Examiner |
|---|---|---|
| The Hague | 6 May 2025 | Benedetti, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 4 567 544 A1

## ANNEX TO THE EUROPEAN SEARCH REPORT
## ON EUROPEAN PATENT APPLICATION NO.

EP 24 21 8146

06-05-2025

| Patent document cited in search report | Publication date | Patent family member(s) | Publication date |
|---|---|---|---|
| CN 116700427 A | 05-09-2023 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63611297